# EUROPEAN PATENT APPLICATION

(11) **EP 4 258 130 A1**
(43) Date of publication of application: **11.10.2023**
(21) Application number: 22896860.8
(22) Date of filing: 14.12.2022
(51) Int. Cl.: G06F 16/44

(54) **METHOD AND APPARATUS FOR VIEWING MULTIMEDIA CONTENT**

(30) Priority: 28.02.2022 CN 202210191802
(71) Applicant: Honor Device Co., Ltd., Shenzhen, Guangdong 518040 (CN)
(72) Inventor: HAN, Xiao, Shenzhen, Guangdong 518040 (CN)
(74) Representative: Gill Jennings & Every LLP
(86) International application number: PCT/CN2022/139077
(87) International publication number: WO 2023/160143

(57) **Abstract**

This application provides a method for browsing multimedia content and an apparatus. This solution introduces a "Magic Take" function, that is, magic moment content, such as a magic moment photo or a short highlight video, is obtained during recording of a video. Further, after the video recording is completed, the magic moment photo can be viewed in a gallery. For example, when a video associated with a magic moment photo is displayed in a first region of a play interface, a thumbnail list including the magic moment photo may be displayed in the first region of the play interface. A user may select a thumbnail from the thumbnail list, and the first region of the play interface is refreshed from displaying the first video (that is, an original video) to displaying a magic moment photo associated with the video. According to this solution, the user can conveniently view magic moment content associated with an original video, so that the convenience for the user to view the magic moment content is improved, and user experience is improved.

## Description

This application claims priority to Chinese Patent Application No. 202210191802.X, filed with the China National Intellectual Property Administration on February 28, 2022 and entitled "METHOD FOR BROWSING MULTIMEDIA CONTENT AND APPARATUS", which is incorporated herein by reference in its entirety.

### TECHNICAL FIELD

This application relates to the field of multimedia technologies, and in particular, to a method for browsing multimedia content and an apparatus.

### BACKGROUND

With the popularization of intelligent terminals and the rapid development of camera technologies for the intelligent terminals, photographing and video recording functions become essential functions of the intelligent terminals. Furthermore, the user's requirements and experience for photographing and video recording are continuously increasing. For example, in some scenarios, a user desires to capture highlight instant photos during video recording, but current camera technologies for intelligent terminals cannot meet this requirement.

### SUMMARY

In view of this, this application provides a method for browsing multimedia content and an apparatus, to solve the above-mentioned technical problem. The disclosed technical solutions are as follows:

According to a first aspect, this application provides a method for browsing multimedia content. The method includes: displaying a first interface in response to an operation of a user for opening a gallery application, where the first interface includes a thumbnail of a first video; displaying a play interface of the first video in response to an operation that is input by the user for the first thumbnail of the first video, where the play interface includes a first region and a second region, the second region displays the first video, the first region includes a thumbnail list, and the thumbnail list includes a thumbnail of at least one magic moment photo associated with the first video; and in response to an operation of the user selecting a second thumbnail in the thumbnail list, displaying a first magic moment photo corresponding to the second thumbnail in the second region, and skipping displaying the first video. It can be learned that, according to this solution, when a video associated with a magic moment photo is displayed in the first region of the play interface, the thumbnail list including the magic moment photo can be displayed in the first region of the play interface, the user can select a thumbnail from the thumbnail list, and the first region of the play interface is refreshed from displaying the first video (that is, an original video) to displaying the magic moment photo associated with the video. Convenience for a user to view a magic moment photo is improved, and user experience is improved.

In a possible implementation, the magic moment photo is automatically shot during recording of the first video; or the magic moment photo is shot, during recording of the first video, in response to a touch operation of the user on a photo key.

In another possible implementation, the thumbnail list further includes a third thumbnail of the first video. In this way, the user can easily view the original video after viewing the magic moment photo, thereby further improving user experience.

In another possible implementation, the third thumbnail of the first video further includes a play control when the second region displays the first magic moment photo corresponding to the second thumbnail. In this way, it is convenient for the user to visually identify the thumbnail of the original video from the thumbnail list, thereby further improving user experience.

In another possible implementation, the first region further includes a selector, and the method further includes: moving the thumbnail list in the first region in response to a sliding operation of the user on the thumbnail list, where a thumbnail remaining in an area in which the selector is located is the first thumbnail selected by the user. In this way, the user can directly slide the thumbnail list to select a magic moment photo or original video to be viewed, and the operation of searching first and then tapping is not required, so that a selection operation of the user is simplified, and user experience is improved.

In another possible implementation, the moving the thumbnail list in the first region in response to a sliding operation of the user on the thumbnail list includes: determining sliding parameters of the sliding operation after detecting the sliding operation of the user on the thumbnail list, where the sliding parameters include a sliding speed and a sliding direction; triggering the thumbnail list to move in the sliding direction and to move at a moving speed that matches the sliding speed; determining a sliding off-hand speed after detecting a sliding off-hand operation; and if the sliding off-hand speed is 0, triggering the thumbnail list to stop moving; or if the sliding off-hand speed is greater than 0, triggering the thumbnail list to continue moving at the sliding off-hand speed until the moving speed drops to 0.

In another possible implementation, the method further includes: determining a moving displacement of the thumbnail list after the thumbnail list stops moving; obtaining a ratio of the moving displacement to a width of the thumbnail, and performing a rounding operation on the ratio to obtain a first value; and if the first value is equal to 0, determining that the thumbnail remaining in the area in which the selector is located is an original thumbnail, where the original thumbnail is a thumbnail in the area in which the selector is located before the sliding operation is received; or if the first value is greater than 0, determining that a thumbnail that is in a target direction of the original thumbnail in the thumbnail list and that is spaced apart from the original thumbnail by the first value is the thumbnail remaining in the area in which the selector is located, where the target direction is a direction opposite to the sliding direction of the sliding operation.

In another possible implementation, the method further includes: in a process of moving the thumbnail list to the right in response to a rightward sliding operation of the user, if the 1^{st} thumbnail in the thumbnail list is in the area in which the selector is located, and it is detected that a sliding off-hand speed of the rightward sliding operation is greater than 0, triggering the thumbnail list to move leftward by a first preset displacement to return to a position at which the 1^{st} thumbnail is located in the area in which the selector is located; and in a process of moving the thumbnail list to the left in response to a leftward sliding operation of the user, if the last thumbnail in the thumbnail list is in the area in which the selector is located, and it is detected that a sliding off-hand speed of the leftward sliding operation is greater than 0, triggering the thumbnail list to move rightward by a second preset displacement to return to a position at which the last thumbnail is located in the area in which the selector is located. A dynamic effect of rebounding against the boundary of the thumbnail list is presented through the above process.

In another possible implementation, the method further includes: in response to a tapping operation of the user on the thumbnail list, determining a tapped thumbnail as the first thumbnail selected by the user.

In another possible implementation, the method further includes: displaying the first video in the second region in response to an operation that is input by the user for the third thumbnail of the first video, where a display status and a play progress of the first video are the same as those of the first video when the first video was last exited, and the display status includes a playing state and a playing pause state. It can be learned that after switching from displaying the magic moment photo to displaying the original video, the original state is kept to continue playback, that is, the play progress corresponding to the last time when the original video exits is automatically located, thereby improving user experience.

In another possible implementation, the thumbnail list further includes a thumbnail of another photo or video other than the first video in the gallery application. In this way, the user can directly operate the thumbnail list to view other photos or videos in the gallery, and does not need to exit the original video to enter the gallery again to view other photos or videos, thereby reducing user operations and improving user experience.

In another possible implementation, the method further includes: in response to a sliding operation of the user in the second region, displaying, in the second region, content corresponding to a fourth thumbnail adjacent to the first thumbnail of the first video in the gallery application.

In another possible implementation, when the first video or the magic moment photo associated with the first video is displayed in the second region, thumbnails of the first video and the magic moment photo are displayed in the thumbnail list in an expanded manner. In this way, it is convenient for the user to view the magic moment photo associated with the first video.

In another possible implementation, when content of the another photo or video is displayed in the second region, the thumbnail list displays the third thumbnail of the first video and hides the thumbnail of the magic moment photo associated with the first video. In this way, it is avoided that the thumbnail of the magic moment photo occupies too much display space, so that more thumbnails that may be viewed by the user are displayed in the first region, and utilization of the display space is improved. In addition, it is avoided that the user needs to repeatedly operate the thumbnail list to locate the thumbnail the user really wants to see, thereby reducing operations of the user.

In another possible implementation, the method further includes: when content corresponding to the fourth thumbnail is displayed in the second region, playing the first video in the second region from the 0th second in response to a sliding operation of the user on the second region, and skipping displaying the content corresponding to the fourth thumbnail in the second region. In this way, when the user returns to view the first video after viewing other photos or videos in the gallery, it is considered that the user may need to view the video from the beginning to prevent the user from adjusting the play progress bar to play from the beginning, thereby reducing operations of the user and improving user experience.

In another possible implementation, the method further includes: when content of the first video is displayed in the second region, the first region further includes a play progress bar, and the play progress bar includes a playing pause control, a mute control, and a play progress control; the playing pause control is located at a first boundary of the first region, and the mute control is located at a second boundary of the first region; and the play progress control is located on the third thumbnail of the first video, and a width of the third thumbnail is larger than a width of another thumbnail in the thumbnail list. In this way, by displaying the play progress bar directly in the first region, it is possible to avoid that the play progress bar displayed in the second region affects an image displayed in the second region, thereby improving utilization of the first region and the second region.

In another possible implementation, the method further includes: displaying an image frame sequence of the first video in an expanded manner in the thumbnail list in response to an operation that is input by the user for the third thumbnail; and displaying, in the second region in response to an operation that is input by the user for the play progress control, an image frame located by the play progress control. In this way, the user can adjust the play progress visually according to the image in the image frame sequence, thereby improving accuracy of adjusting the play progress.

In another possible implementation, the method further includes: when the second region displays a magic moment photo associated with the first video, displaying the third thumbnail of the first video in the thumbnail list and hiding the image frame sequence of the first video. In this way, the image frame sequence of the original video can be prevented from occupying too much space of the thumbnail list, the length of the thumbnail list is shortened, and operations of the user for locating another thumbnail is reduced.

In another possible implementation, the method further includes: displaying a second interface in response to a sliding operation of the user on the second region, where the second interface displays the content of the fourth thumbnail adjacent to the first thumbnail of the first video in the gallery application, and does not display the thumbnail list.

In another possible implementation, an aspect ratio of each thumbnail in the thumbnail list is 1:1; or an aspect ratio of the first thumbnail is an actual aspect ratio of a video or photo corresponding to the first thumbnail, and an aspect ratio of another thumbnail in the thumbnail list is 1:1. In this solution, the thumbnail of the currently displayed item is displayed according to the actual aspect ratio of the photo or video, so that the user can quickly identify the thumbnail of the currently displayed item, thereby improving user experience.

In another possible implementation, a height of the first thumbnail is greater than a height of another thumbnail in the thumbnail list. In this way, the thumbnail corresponding to the currently displayed item can be more quickly identified by the user, and user experience is further improved.

In another possible implementation, the thumbnail of the first video includes a first identifier, and the first identifier is used to indicate that the first video is associated with at least one magic moment photo. In this way, it is convenient for the user to visually identify a video associated with magic moment content, thereby improving an identification degree of such video.

In another possible implementation, the first region is located below the second region, and an area of the second region is larger than an area of the first region.

According to a second aspect, this application further provides an electronic device. The electronic device includes one or more processors, a memory, and a touchscreen. The memory is configured to store program code. The processor is configured to run the program code, to enable the electronic device to implement the method for browsing multimedia content according to any one of the first aspect or the implementations of the first aspect.

According to a third aspect, this application further provides a computer-readable storage medium storing instructions, where when the instructions are run on an electronic device, the electronic device is enabled to perform the method for browsing multimedia content according to any one of the first aspect or the implementations of the first aspect.

It should be understood that descriptions of technical features, technical solutions, beneficial effects, or similar expressions in this application do not imply that all features and advantages can be achieved in any single embodiment. On the contrary, it may be understood that descriptions of features or beneficial effects mean that specific technical features, technical solutions or beneficial effects are included in at least one embodiment. Therefore, descriptions of technical features, technical solutions, or beneficial effects in this specification do not necessarily refer to a same embodiment. Further, the technical features, technical solutions, and beneficial effects described in the embodiments may be combined in any appropriate manner. A person skilled in the art should understand that an embodiment may be implemented without one or more specific technical features, technical solutions, or beneficial effects in a specific embodiment. In other embodiments, additional technical features and beneficial effects may be identified in a specific embodiment that does not reflect all embodiments.

### BRIEF DESCRIPTION OF DRAWINGS

To describe the technical solutions in embodiments of the present invention or the conventional technology more clearly, the following briefly describes the accompanying drawings for describing the embodiments or the conventional technology. It is clear that, the accompanying drawings in the following description show some embodiments of the present invention, and a person of ordinary skill in the art may still derive other drawings from these accompanying drawings without creative efforts.
FIG. 1 is a schematic diagram of a structure of an electronic device according to an embodiment of this application;
FIG. 2~FIG. 14 are schematic diagrams of entering related content viewing interfaces of "Magic Take" according to an embodiment of this application;
FIG. 15 is a schematic diagram of an interface in a landscape display mode according to an embodiment of this application;
FIG. 16~FIG. 18 are schematic diagrams of interfaces for viewing related content of "Magic Take" according to an embodiment of this application;
FIG. 19 is a schematic diagram of an interface of a thumbnail list according to an embodiment of this application;
FIG. 20~FIG. 22 are schematic diagrams of interfaces of a process of sliding a thumbnail list according to an embodiment of this application;
FIG. 23 is a schematic diagram of another interface of a thumbnail list according to an embodiment of this application;
FIG. 24~FIG. 26 are schematic diagrams of interfaces displayed when a thumbnail is slid in a landscape display mode according to an embodiment of this application;
FIG. 27~FIG. 30 are schematic diagrams of interfaces corresponding to a process of sliding a large-picture region according to an embodiment of this application;
FIG. 31~FIG. 34 are schematic diagrams of other interfaces corresponding to a process of sliding a large-picture region according to an embodiment of this application;
FIG. 35 is a schematic diagram of a video playback interface according to an embodiment of this application;
FIG. 36 is a schematic diagram of another video playback interface according to an embodiment of this application; and
FIG. 37 is a schematic diagram of another interface of a thumbnail list according to an embodiment of this application.

### DESCRIPTION OF EMBODIMENTS

The terms "first", "second", "third", and the like in the specification, claims, and accompanying drawings of this application are used to distinguish between different objects, but are not used to limit a specific sequence.

In embodiments of this application, words such as "example" or "for example" are used to represent giving examples, illustrations, or descriptions. Any embodiment or design solution described as "example" or "for example" in embodiments of this application should not be construed as being more preferred or advantageous than other embodiments or design solutions. Specifically, the words such as "example" or "for example" are used to present related concepts in a specific manner.

For clarity and brevity of the following embodiments, a brief description of a related technology is first provided.

Magic moment (magicmoment, MM) refers to moments of some wonderful pictures in a video recording process. For example, the MM may be an optimal motion instant, an optimal expression moment, or an optimal check-in action. It may be understood that, the term MM is not limited in this application, and MM may also be referred to as a beautiful moment, a splendid moment, a wonderful instant, a decisive instant, a best shot (bestshot, BS), or the like. In different scenes, the magic moment may be a different type of picture instant. For example, when a video of a football match is recorded, the magic moment may be an instant at which an athlete's foot comes into contact with a football during a shot or a pass, or the magic moment may be an instant at which the football flies into the goal; when a video of a person jumping from the ground is recorded, the magic moment may be an instant at which the person is at the highest point in the air, or may be an instant at which a motion of the person in the air is most stretching.

Magic Take may be understood as follows: When a user uses a camera application to shoot a video, one or more photos of magic moments and one or more selected videos can be obtained by pressing a "shoot" icon once.

An implementation process of "Magic Take" may be as follows: An electronic device automatically identifies a magic moment and triggers capture during video recording to obtain a magic moment photo (that is, an MM photo); after the recording ends, the MM photo and a wonderful short video (also referred to as a selected short video, a wonderful video, or a selected video) may be recommended to a user when the user views the recorded video. For example, a complete recorded video is one minute, and a plurality of (for example, five) magic moment photos and a wonderful short video with duration of first preset duration (for example, 15 seconds) may be obtained. It may be further understood that, "Magic Take" may alternatively have other names, for example, "magic obtain", "magic shoot", "instant film", "instant movie", or "AI instant movie".

It should be further noted that, when the user shoots a video in the Magic Take mode of the mobile phone, in addition to obtaining the shot video and one or more highlight images in the video, the mobile phone may further generate a configuration file. The configuration file may include tags (TAG) of the video. Alternatively, the mobile phone may obtain tag data. The tag data includes tags (TAG) of the video. In addition, the tag data may be added to the video, and is usually located in a video header.

Manual capture: During video recording, manual photographing can be performed to obtain a picture that is expected to be shot.

To meet the need of a user to capture a brilliant instant picture in a video recording process, this application introduces a "Magic Take" function, that is, to obtain magic moment content, such as a magic moment photo or a brilliant short video, during video recording. In addition, when the video recording is completed, the magic moment photo can be viewed in the gallery. According to the solution, the magic moment photo can be obtained in the process of shooting the video, to meet the requirements of the user, and the user can view the shot video and the magic moment photo in the gallery, thereby improving convenience of viewing by the user and improving user experience. In addition, compared with randomly obtaining a photo in a recorded video, quality of the magic moment image obtained in this solution is higher, and user experience is better.

The method for browsing multimedia content provided in the embodiments of this application is applicable to various electronic devices. The electronic devices may be, for example, a mobile phone, a smart screen, a tablet computer, a wearable electronic device, a vehicle-mounted electronic device, an augmented reality (augmented reality, AR) device, a virtual reality (virtual reality, VR) device, a notebook computer, an ultra-mobile personal computer (ultra-mobile personal computer, UMPC), a netbook, a personal digital assistant (personal digital assistant, PDA), a projector, or the like.

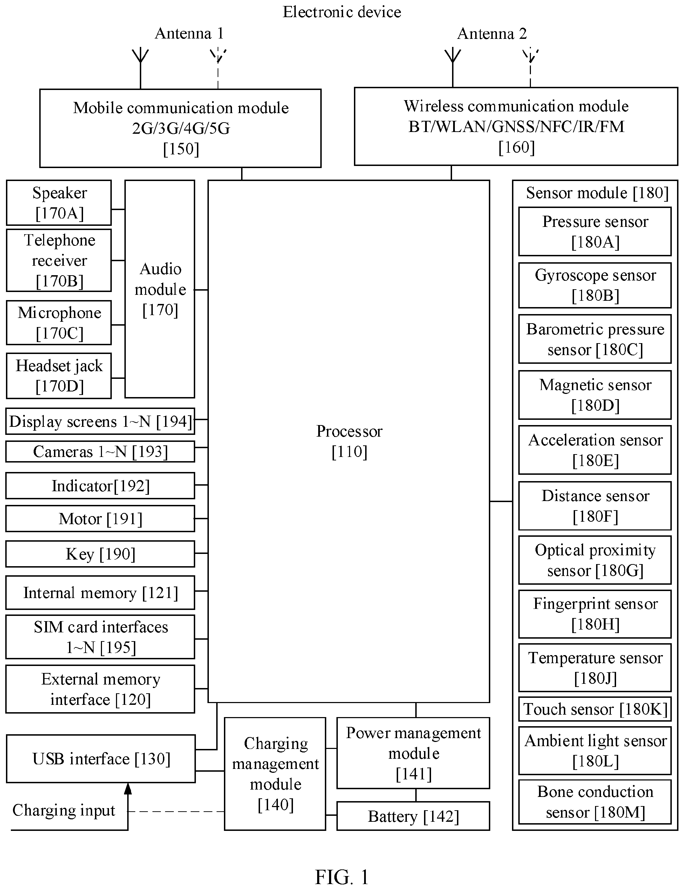

For example, that the electronic device is a mobile phone is used as an example. FIG. 1 is a schematic diagram of a structure of an electronic device according to an embodiment of this application.

The electronic device may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a telephone receiver 170B, a microphone 170C, a headset jack 170D, a sensor module 180, a key 190, a motor 191, an indicator 192, a camera 193, a display screen 194, a subscriber identification module (subscriber identification module, SIM) card interface 195, and the like.

The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It should be noted that a structure shown in FIG. 1 does not constitute a specific limitation on the electronic device. In some other embodiments of this application, the electronic device may include more or fewer components than the components shown in FIG. 1, or the electronic device may include a combination of some components among the components shown in FIG. 1, or the electronic device may include subcomponents of some components among the components shown in FIG. 1. The components shown in FIG. 1 may be implemented by hardware, software, or a combination of software and hardware.

The processor 110 may include one or more processing units. For example, the processor 110 may include at least one of the following processing units: an application processor (application processor, AP), a graphics processing unit (graphics processing unit, GPU), an image signal processor (image signal processor, ISP), a controller, a video codec, and a digital signal processor (digital signal processor, DSP). Different processing units may be independent devices, or may be an integrated device.

The controller may generate an operation control signal based on an instruction operation code and a time sequence signal, to control instruction fetching and instruction execution.

The electronic device may implement a display function by using the GPU, the display screen 194, and the application processor. The GPU is a microprocessor for image processing, and is connected to the display screen 194 and the application processor. The GPU is configured to perform mathematical and geometric calculation for graphics rendering. The processor 110 may include one or more GPUs, and the GPU executes a program instruction to generate or change display information.

The display screen 194 may be configured to display an image or a video. The display screen 194 includes a display panel. In some embodiments, the electronic device may include one or N display screens 194, where N is a positive integer greater than 1. In a possible implementation, the display screen 194 may be used to display magic moment photos, recorded short videos, and the like.

The electronic device may implement a shooting function by using the ISP, the camera 193, the video codec, the GPU, the display screen 194, the application processor, and the like.

The ISP is configured to process data fed back by the camera 193. For example, at the time of photographing, a shutter is opened, and light is transmitted to a photosensitive element of the camera by using a lens. An optical signal is converted into an electrical signal. The photosensitive element of the camera transmits the electrical signal to the ISP for processing, to convert the electrical signal into an image visible to naked eyes. The ISP may perform algorithm optimization on noise, brightness, and a color of an image, and the ISP may further optimize parameters such as exposure and a color temperature of a shooting scene. In some embodiments, the ISP may be arranged in the camera 193.

The camera 193 is configured to capture a still image or a video. In some embodiments, the electronic device may include 1 or N cameras 193, where N is a positive integer greater than 1. In this embodiment of this application, the processor 110 may determine, based on a video stream recorded by the camera 193, a magic moment MM in the video stream, and when the MM is determined, call the camera 193 to automatically trigger photographing. The ISP and the DSP may process an image signal of the magic moment MM to obtain an image of the magic moment.

The digital signal processor is configured to process a digital signal. In addition to processing the digital image signal, the digital signal processor can further process another digital signal.

The video codec is configured to compress or decompress a digital video.

The internal memory 121 may be configured to store computer executable program code, and the executable program code includes instructions. The internal memory 121 may include a program storage area and a data storage area. The program storage area may store an operating system, and an application required by at least one function (for example, a sound playing function and an image playing function). The data storage area may store data (for example, audio data and an address book) created during use of the electronic device. The processor 110 performs various processing methods of the electronic device by running the instructions stored in the internal memory 121 and/or the instructions stored in the memory disposed in the processor.

The method for browsing multimedia content provided in this application is described in detail by using an example in which the electronic device is a mobile phone and a camera application is installed in the mobile phone.

In some embodiments of this application, the user can manually enable or disable the "Magic Take" function provided in embodiments of this application. Certainly, in other embodiments, the system enables the "Magic Take" function by default, and the user may manually disable the function.

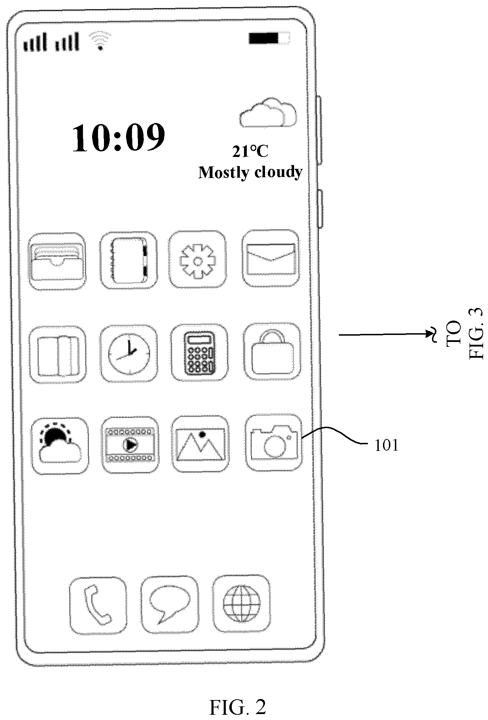

The following describes a portal of the "Magic Take" function with reference to FIG. 2-FIG. 6.

For example, the user can indicate the mobile phone to start the camera application by touching a specific control on a screen of the mobile phone, pressing a specific physical key or key combination, or inputting a voice, a mid-air gesture, or the like. In response to an indication of the user for starting the camera, the mobile phone starts the camera application and displays a shooting interface.

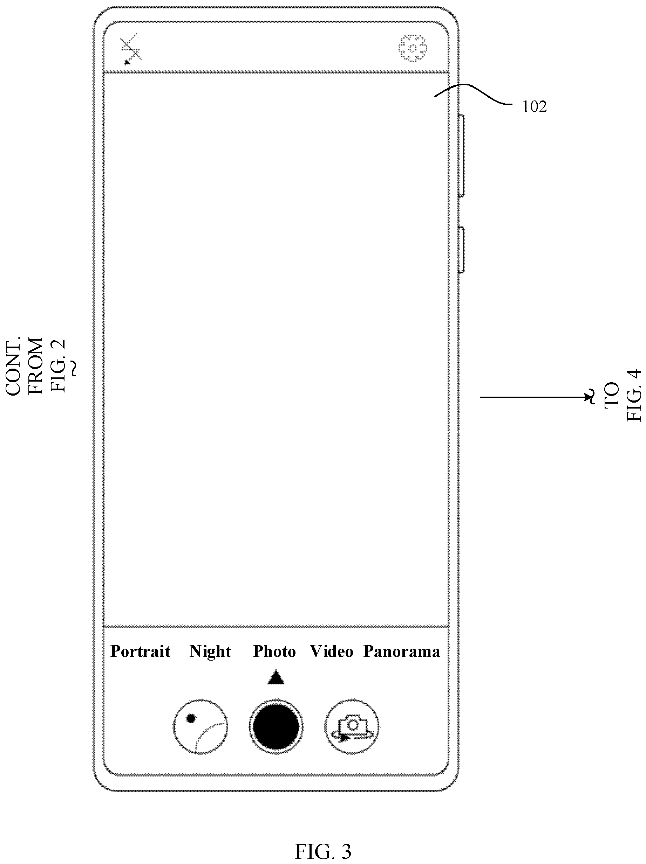

In an example embodiment, for example, as shown in FIG. 2, the user can tap a "camera" application icon 101 on a home screen of the mobile phone to indicate the mobile phone to start the camera application. At this moment, the mobile phone displays the shooting interface shown in FIG. 3.

In other example embodiments, when the mobile phone is in a screen locked state or runs another application, the user may alternatively control the mobile phone to start the camera application in another manner, so that the mobile phone displays the shooting interface shown in FIG. 3. This is not described in detail here.

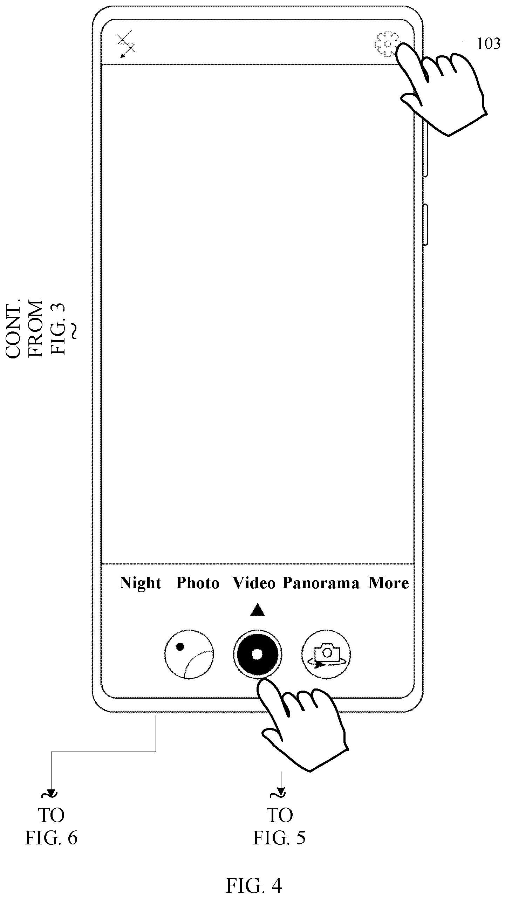

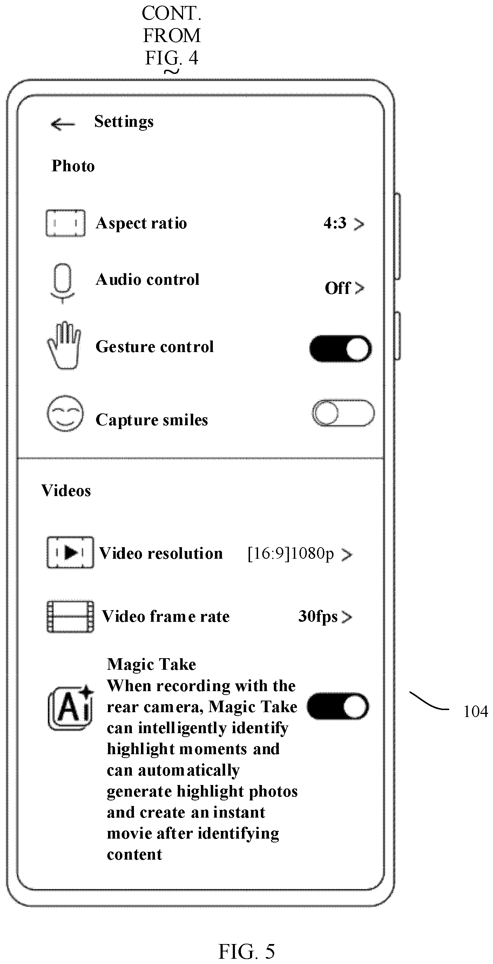

As shown in FIG. 3, the shooting interface of the camera application may include a viewfinder frame 102, a photo control, a video control, and other functional controls (such as a Portrait functional control, a Night functional control, or a More control). After the user taps the video control, the camera application starts a video mode, and the mobile phone can display a video shooting interface shown in FIG. 4. The user taps a "Settings" control 103 of the video shooting interface to enter a camera setting interface shown in FIG. 5.

As shown in FIG. 5, the camera setting interface displays a control 104 for enabling or disabling the "Magic Take" function. The state of the control 104 shown in FIG. 5 indicates that the "Magic Take" function is enabled.

In addition, the camera system may enable the control 104 by default, that is, enable the "Magic Take" function by default, and the user may manually tap the control 104 to disable the "Magic Take" function if the user does not need to use the "Magic Take" function.

After the user enables the "Magic Take" function, when the camera application is in the video mode, the camera application automatically and intelligently identifies a magic moment during video recording, and after content of the magic moment is identified, the camera application automatically generates a magic moment photo. The recorded video may be referred to as an original video. In addition, when the original video is larger than second preset duration (for example, 15s), and the magic moment content is identified, a short video may be automatically generated based on the magic moment content and the original video, and the generated short video may be referred to as a short highlight video (or a selected short video, or a highlight video, or a selected video).

It may be understood that, the camera setting interface shown in FIG. 5 may alternatively include other controls with respect to video recording settings, for example, a control for setting video resolution and a control for setting a video frame rate. The controls shown in FIG. 5 are merely an example description, and the embodiment of this application does not limit content items displayed in the camera setting interface.

The control for setting video resolution shown in FIG. 5 above may be used to select resolution of the video. For example, the video resolution may be selected from 3840*2160 (ultra high definition 4K), 1920* 1080 (1080p full high definition), 1280*720 (720P high definition), and the like. It should be understood that, options for the video resolution depend on actual configuration of the mobile phone.

In addition, the camera setting interface shown in FIG. 5 may further include controls with respect to photographing settings, for example, a control for setting an aspect ratio, a control for setting gesture photographing, and a control for setting smile capturing.

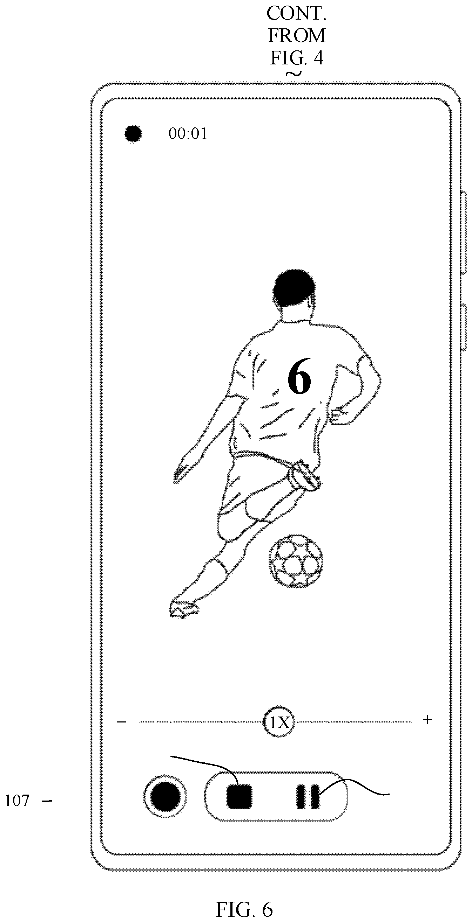

The user taps a Video key shown in FIG. 4 to enter the video shooting interface. In an example embodiment, the video shooting interface is shown in FIG. 6. FIG. 6 shows a picture (for example, a picture of the 01^{st} second) in a video recording process, and the interface includes a Pause key 105, a Stop key 106, and a Photo key 107.

During the video recording, the user can tap the Photo key 107 to manually capture a photo. During the video recording, the user can tap the Pause key 105 to pause the recording process. The user can tap the Stop key 106 to end the recording process and obtain the shot video.

A manner of triggering the mobile phone to enable the "Magic Take" function is described above, and this application is not limited to enabling "Magic Take" in the video mode. In other example embodiments of this application, the user may enable the "Magic Take" function in another manner. For example, "Magic Take" serves as a newly added mode, and the user may choose to enter the "Magic Take" mode in the camera application. For another example, the user may set a video mode of the mobile phone to the "Magic Take" mode in a setting menu.

After the "Magic Take" function is enabled by the user, an original video recorded by the user and "Magic Take" content (for example, magic moment photos or short videos) related to the original video can be viewed in the gallery.

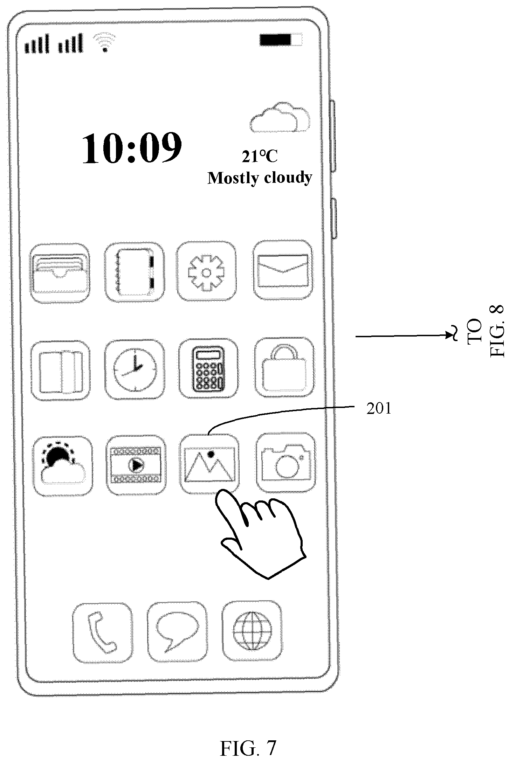

The following describes the portal for the user to enter the gallery to view the original video and the associated "Magic Take" content with reference to FIG. 7-FIG. 15.

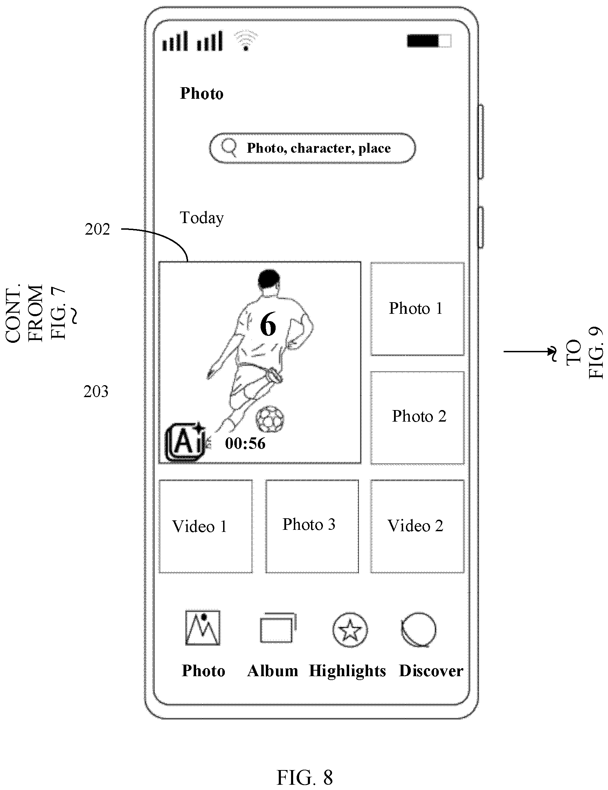

In an example embodiment, as shown in FIG. 7, the user can tap the icon 201 of the "Gallery" application on the home screen of the mobile phone to control the mobile phone to start the gallery application. In this case, the mobile phone displays the "Photo" tab interface shown in FIG. 8.

In other example embodiments, the user can alternatively control the mobile phone to start the gallery application by touching a specific control on a screen of the mobile phone, pressing a specific physical key or key combination, or inputting a voice, a mid-air gesture, or the like. The gallery application may also be referred to as an album, a photo, or the like.

The "Photo" tab interface shown in FIG. 8 displays thumbnails of photos and videos shot by the user using the camera application of the mobile phone. For example, the mobile phone may display the thumbnails of photos and videos in the "Photo" tab interface in chronological order.

To help the user distinguish between a common video and a video associated with "Magic Take" content, a specific identifier may be displayed on a thumbnail corresponding to the video associated with "Magic Take" content displayed in the gallery.

In an example embodiment, as shown in FIG. 8, the thumbnail (that is, a first thumbnail) of the video 202 further includes an AI identifier 203 in addition to a preview of the recorded original video. The AI identifier indicates that the video has associated "Magic Take" content (for example, a magic moment photo or a short highlight video). For example, the AI identifier 203 is used to identify that the video 202 was recorded in the "Magic Take" mode. When the thumbnail of the video 202 contains the AI identifier 203, it indicates that a photo or video or the like associated with the video 202 is also obtained when the video 202 is recorded.

It may be understood that the AI identifier 203 shown in FIG. 8 is only an example of this embodiment of this application, and other identifiers may alternatively be used to mark such videos associated with "Magic Take" content. A specific form of the AI identifier is not limited in this application.

The "Photo" tab interface shown in FIG. 8 may further include a thumbnail of a common photo and a thumbnail of a common video. The common photo is a photo shot by touching a photo key, such as a photo key in a photo mode, or a photo key in a video mode. A common video is a video without associated "Magic Take" content, for example, a video shot in a scene in which the "Magic Take" function is not enabled, or a video shot when the "Magic Take" function is enabled but no magic moment photo is identified, or a video with recording duration less than second preset duration.

The thumbnail of the video 202 and thumbnails of a common photo and a common video shown in FIG. 8 may have different sizes or the same size. This is not limited in the embodiment of this application.

In addition, the "Photo" tab interface shown in FIG. 8 may further include a control of a search bar, an Album control, a Time control, and a Discover control.

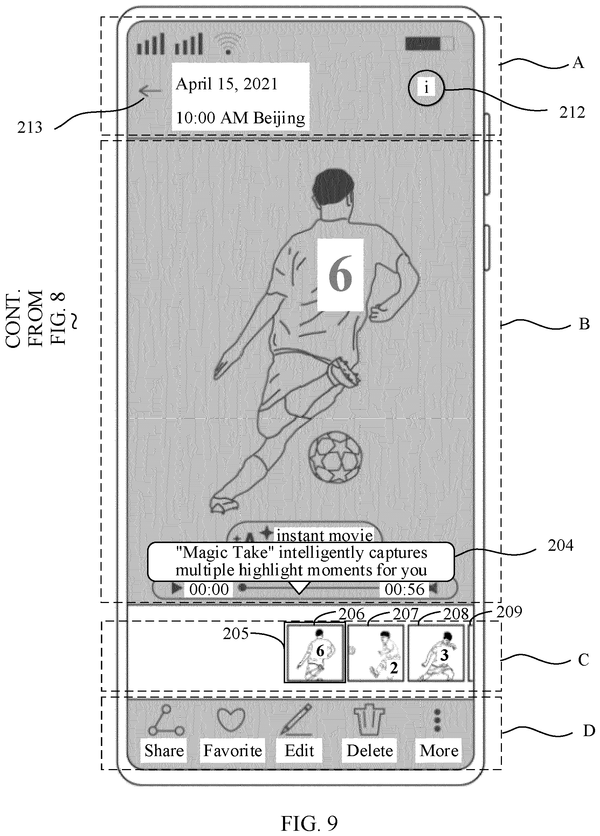

When the user views the video associated with the "Magic Take" content, the mobile phone enters a video playback interface if the user taps the thumbnail of the video 202 in FIG. 8. As shown in FIG. 9, the entire interface includes four regions A, B, C, and D from top to bottom, where the area of the region B is the largest and the areas of the regions A, C, and D are smaller. Further, the region A may overlap a portion of the region B, and details are not described herein.

The region A is located at the top of the entire interface and includes a status bar and a title bar. The status bar is located at the top of the region A, and the status bar is used to display a current status of the mobile phone, for example, information such as a cellular network signal quality identifier, a wireless network signal quality identifier, and a real time. The title bar may display content of the shot video such as a time, a place, a detail control 212, and a control 213 for returning to the previous level.

The status bar is a status display bar common to different applications in the mobile phone. For example, display interfaces of different applications in the mobile phone may each include the status bar and the displayed content remains unchanged. In addition, the status bar is an optional display item, and a display interface of an application may not include the status bar, but generally includes a title bar. The status bar and the title bar may be hidden, for example, the status bar and the title bar may be hidden after the user taps any position in the region B.

The region B is a large-picture region showing a video/photo, for example, the region B may play the video 202 tapped by the user according to an original shooting ratio or shooting pixels of the video 202.

The region C is used to display at least some thumbnails in the thumbnail list. The thumbnail list may include a thumbnail of the recorded original video and thumbnails of a plurality of (for example, five) obtained magic moment photos, or the thumbnail list may include only the thumbnails of the plurality of magic moment photos, excluding the thumbnail of the original video.

The embodiments of this application do not limit a quantity of the obtained magic moment photos. For example, longer duration of the recorded original video, or a larger quantity of scenes of magic moments appearing in the original video may indicate a larger quantity of obtained magic moment photos. Shorter duration of the recorded original video, or a smaller quantity of scenes of magic moments appearing in the original video may indicate a smaller quantity of obtained magic moment photos.

In a possible implementation, the thumbnails in the thumbnail list are arranged in order from left to right. As shown in FIG. 9, the thumbnail 206 displayed in the region C is a thumbnail (which may be referred to as a second thumbnail) of the original video, and the thumbnails 207-209 are thumbnails of magic moment photos.

The embodiments of this application do not limit a quantity of magic moment photos, for example, there may be one or more (for example, five) magic moment photos. Because the display area of the region C is limited, a quantity of displayed thumbnails is limited, and in the example shown in FIG. 9, the mobile phone is in a portrait display mode, showing only the thumbnail of the original video and thumbnails of two magic moment photos. It may be understood that a quantity of thumbnails displayed in the region C is related to sizes of the thumbnails and a width of the screen of the mobile phone, and this application does not limit the quantity of thumbnails displayed in the region C.

In a possible implementation, the thumbnails corresponding to the plurality of magic moment photos shown in the region C are arranged from left to right in order of the shooting time from early to late. For example, as shown in FIG. 9, a shooting time corresponding to the thumbnail 207 is earlier than a shooting time corresponding to the thumbnail 208, the shooting time corresponding to the thumbnail 208 is earlier than a shooting time corresponding to the thumbnail 209, and so on, which are not described in detail herein one by one. Certainly, the thumbnails of the magic moment photos may be arranged in other manners, for example, the thumbnails may be arranged in order of the shooting time from late to early. This application does not limit the arrangement manner of the thumbnails of the magic moment photos.

In addition, the video or photo currently displayed in the region B may be referred to as a currently displayed item, and the periphery of the thumbnail corresponding to the currently displayed item in the region C further includes a positioning box 205 slightly larger than the size of the thumbnail. In other words, the positioning box 205 is used to indicate that the photo or video corresponding to the thumbnail is the currently displayed item of the region B. The positioning box 205 may also be referred to as a selector.

Using the positioning box 205 to indicate the currently displayed item is only an example provided in an embodiment of this application. In other embodiments, the currently displayed item may be otherwise indicated, for example, a triangular selector is displayed above or below the thumbnail of the currently displayed item, and one corner of the triangular selector points to the thumbnail of the currently displayed item. This application does not limit a specific manner of indicating the currently displayed item.

The region D is located at the bottom of the entire interface and may display operational controls for the currently displayed item, such as a Share control, a Favorite control, an Edit control, a Delete control, and a "More" control. In addition, the content displayed in the region D may be hidden, for example, the content displayed in the region D may be hidden after the user taps any position in the region B.

In an example embodiment, if the user views a video associated with "Magic Take" content for the first time, to guide and remind the user that the video includes "Magic Take" content, a guide box 204 (or referred to as a bubble prompt box) may be displayed above the region C, and the prompt content may be: "Magic Take" can intelligently capture multiple magic moments for you. In other words, the guide box 204 is used to inform the user that the region C includes "Magic Take" content.

In another example embodiment, to better guide and remind the user that the video includes "Magic Take" content, the regions A, B, and D may be covered with a mask layer (or a mask) with specific transparency, such as a gray mask. The transparency of the mask may be set according to actual requirements, for example, 20%-80%. The transparency of the mask is not limited in this application. The region C is not covered with a mask, so that the guide box 204 and the region C are highlighted.

The prompt manner of the bubble prompt box or the mask shown in FIG. 9 is merely an example provided in an embodiment of this application. In other embodiments of this application, other prompt manners may be used, and this is not limited in this application.

It may be understood that, to avoid disturbing the normal use of the user with a large quantity of reminders, if the user is not viewing the video associated with the "Magic Take" content for the first time, the user is no longer guided and reminded, for example, the guide box 204 or the mask shown in FIG. 9 is not displayed. For example, after the user views a video A associated with "Magic Take" content for the first time, when the user views another video B that has not been viewed and that is associated with "Magic Take" content, the guide box and the mask are no longer displayed.

It may be understood that in the state in which the guide box 204 and the mask are displayed, the video displayed in the region B is not automatically played. The video displayed in the region B may be automatically played after the guide box 204 and the mask disappear. For example, after the user taps any position in the interface shown in FIG. 9, the guide box 204 and the mask disappear. Alternatively, after the user taps any position in the region covered by the mask, the guide box 204 and the mask disappear. Alternatively, the guide box 204 and the mask automatically disappear after being displayed for preset duration (for example, 10s). This application does not limit the specific manner in which the guide box and the mask disappear.

The foregoing describes a manner in which a video associated with "Magic Take" content and the "Magic Take" content are viewed from the "Photo" tab of the Gallery application. In addition, the user may alternatively view the original video and associated "Magic Take" content from an "Album" tab of the Gallery application.

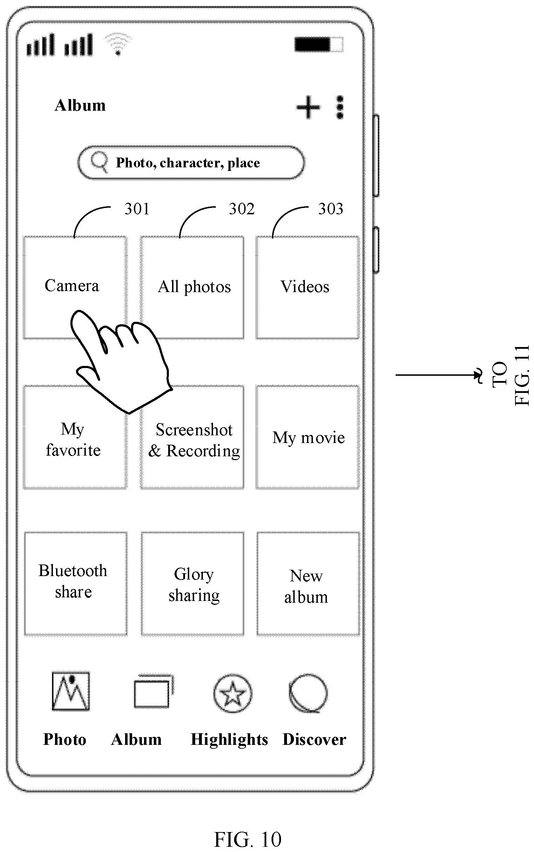

For example, the user can tap the "Album" tab in the interface shown in FIG. 8 to enter the album interface shown in FIG. 10.

As shown in FIG. 10, the album interface includes various albums in the gallery, such as a "Camera" album 301, an "All photos" album 302, and a "Video" album 303.

If the user taps the "Camera" album 301 shown in FIG. 10, the user enters an interface of the "Camera" album. The "Camera" album displays thumbnails of videos and photos shot by using the Camera application.

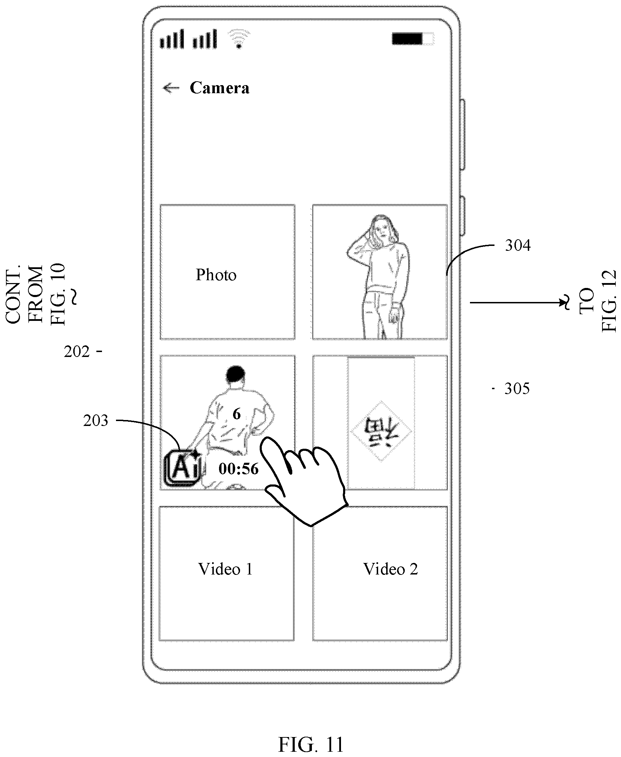

As shown in FIG. 11, the interface of the "Camera" album includes thumbnails of photos/videos such as a photo, a photo 304, a video 202, and a photo 305. The thumbnails of the photos and the videos in the "Camera" album are arranged in order of the shooting time from late to early, and the photo or the video whose shooting time is the latest (or referred to as the latest shooting time) is arranged at the foremost position in the interface (that is, the position close to the upper left corner of the interface). For example, in FIG. 11, a shooting time corresponding to the photo 304 is later than a shooting time of the video 202, the shooting time corresponding to the video 202 is later than a shooting time of the photo 305, and so on.

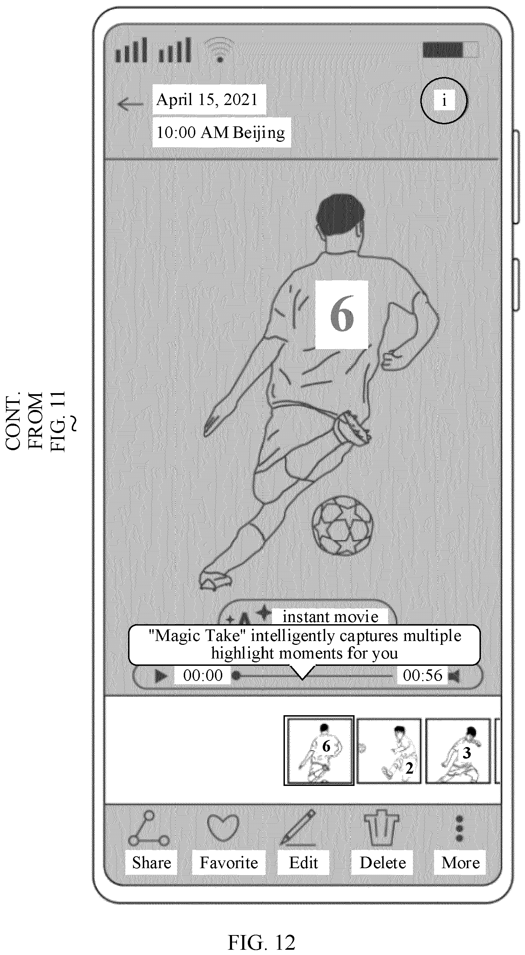

As shown in FIG. 11, the thumbnail of the video 202 includes an AI identifier 203, that is, the video 202 is associated with "Magic Take" content, such as photos or videos. If the user views a video containing an AI identifier for the first time, the user enters the interface shown in FIG. 12. The interface shown in FIG. 12 is the same as the interface shown in FIG. 9, and details are not described herein.

In other example embodiments, if the user taps the "All photos" album 302 in the interface shown in FIG. 10, the user enters the interface of the "All photos" album. As mentioned previously, the "All photos" album 302 includes videos shot by using the camera application, that is, if the user enables the "Magic Take" function and shoots a video associated with "Magic Take" content, if the user views a video containing an AI identifier in an interface of the "All photos" album for the first time, the mobile phone jumps from the interface of the "All photos" album to the interface shown in FIG. 12.

Similarly, if the user uses the camera application to shoot a video associated with "Magic Take" content, this type of video is also displayed in the "Video" album 303 in the interface shown in FIG. 10. If the user views a video containing an AI identifier for the first time, the mobile phone jumps from the interface of the "Video" album to the interface shown in FIG. 12.

Further, if the user moves a video associated with "Magic Take" content to another album, the user can view the video from the another album, and details are not described herein.

It should be noted that the interfaces shown in FIG. 10 and FIG. 11 are merely examples, and the views of the interfaces shown in FIG. 10 and FIG. 11 are not limited in this application. For convenience of drawing, sizes of cover thumbnails of all albums in FIG. 10 are the same, that is, display sizes of all the albums are the same. In actual use, sizes of different albums may be different, and the arrangement manner is not limited to the manner shown in FIG. 10. In addition, in the display interface of the "Camera" album shown in FIG. 11, one line includes thumbnails of two videos or photos. In actual use, one line may include thumbnails of more (for example, four) videos or photos. This is not limited in this embodiment of this application.

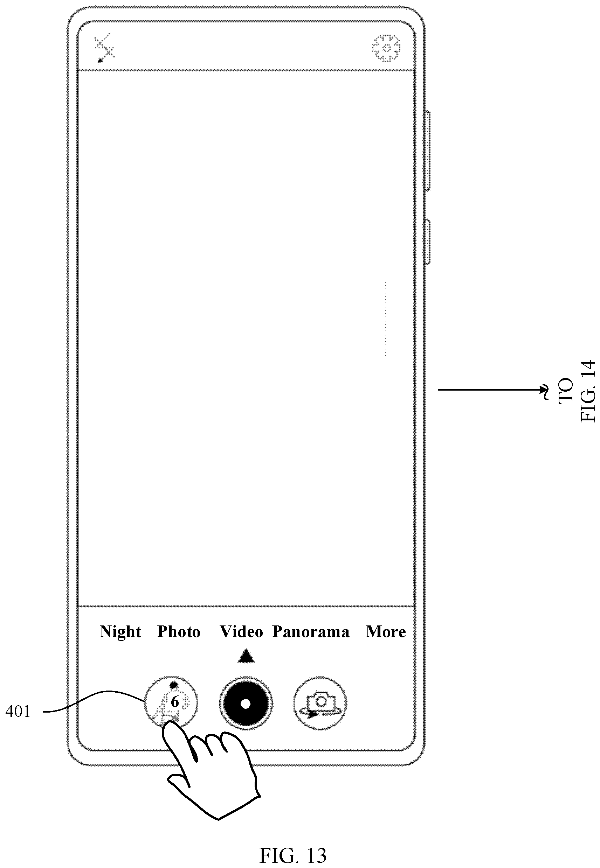

In another example embodiment, a portal of the gallery application is provided in the shooting interface, and a thumbnail of the last shot video or photo can be displayed at the portal. As shown in FIG. 13, the portal of the gallery application in the shooting interface is a preview 401. The preview 401 is used to display a thumbnail of a video or a photo that is shot last time.

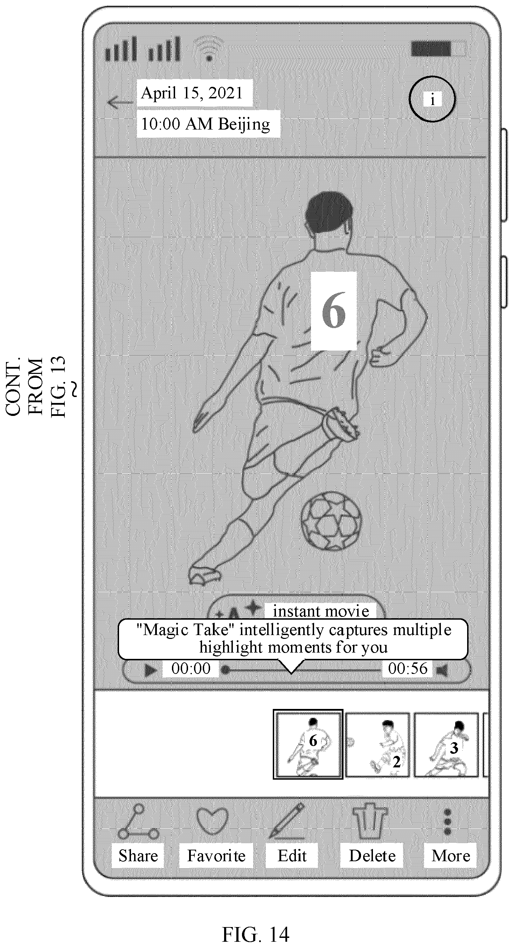

If the user ends the current recording after enabling the "Magic Take" function, the mobile phone can obtain a video associated with "Magic Take" content. At this time, the mobile phone may display a thumbnail of the recorded original video in the preview 401 shown in FIG. 13. If the user views the video associated with "Magic Take" content for the first time by tapping the preview 401, the mobile phone displays the interface shown in FIG. 14. The interface shown in FIG. 14 is the same as that shown in FIG. 9 and details are not described herein again.

Further, as shown in FIG. 9, when the mobile phone is in the portrait display mode, the area of the region C is small, content that can be displayed in the region C is limited, and an aspect ratio of each thumbnail can be 1:1. In other words, each thumbnail in the region C is a square image. In this way, the region C can display more thumbnails, and the user can view all thumbnails without repeated operations, thereby improving user experience.

In another example, when the mobile phone is in the portrait display mode, an aspect ratio of a thumbnail of the currently displayed item in the region C may alternatively be an actual aspect ratio of the video/photo, and an aspect ratio of another thumbnail is 1:1. In addition, to further highlight the thumbnail of the currently displayed item in the thumbnail list, the size of the thumbnail of the currently displayed item may be slightly larger than that of other thumbnails, that is, the thumbnail of the currently displayed item presents a magnifying effect.

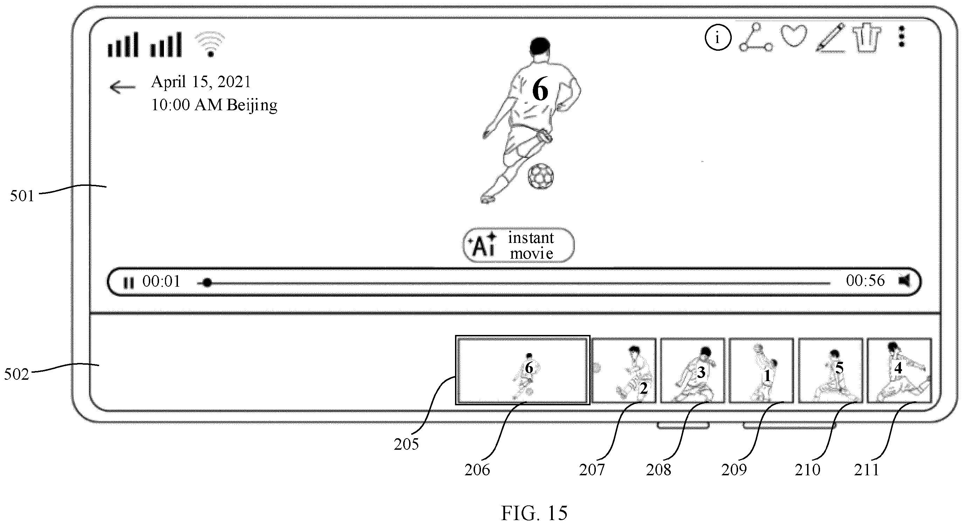

In another scenario, the mobile phone is in a landscape display mode, as shown in FIG. 15, and the region 501 is used to play a video or a magic moment photo. The region 502 is used to display thumbnails of video and magic moment photos. When the mobile phone is in the landscape mode, the area of the region 502 is large and more content can be displayed. Therefore, the aspect ratio of the thumbnail corresponding to the currently displayed item in the region 502 may be an actual aspect ratio, and aspect ratios of the other thumbnails are all 1: 1. An aspect ratio of a photo may include 3:4, 1:1, a full screen, or the like, and an aspect ratio of a video may include 16:9, 21:9, a full screen, or the like.

For example, as shown in FIG. 15, the currently displayed item displayed in the region 501 is a video (video 202 in FIG. 8) corresponding to the thumbnail 206, in other words, the positioning box 205 is located around the thumbnail 206. If an aspect ratio at the time of shooting of the video 202 is 16:9, an aspect ratio of the thumbnail 206 is also 16:9, and aspect ratios of thumbnails 207-211 of magic moment photos are all 1:1, that is, square. In addition, the thumbnail of the currently displayed item is slightly larger than other thumbnails, that is, the thumbnail of the currently displayed item presents a magnifying effect.

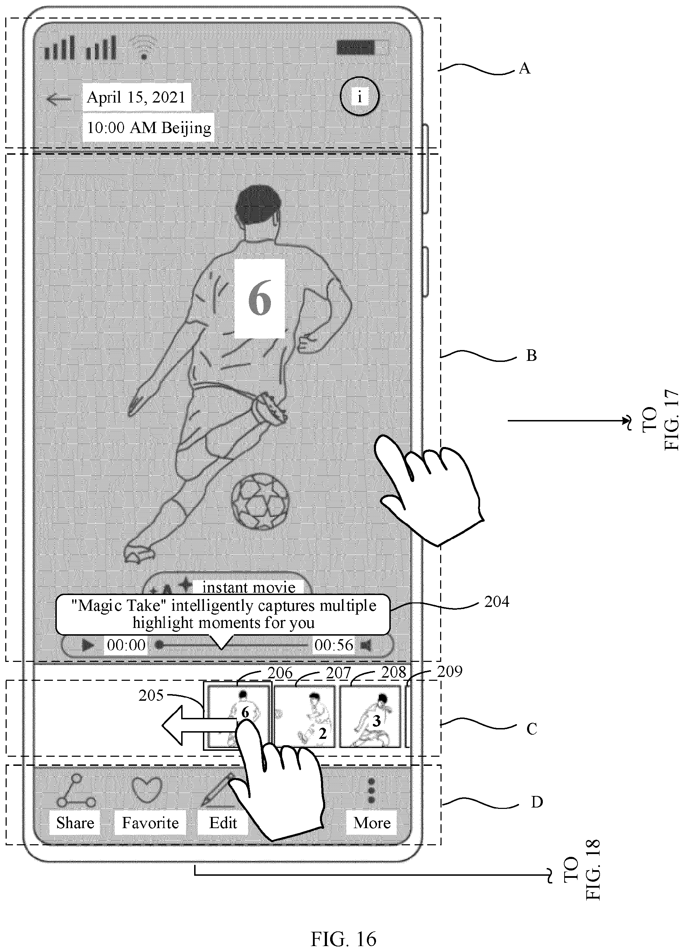

The foregoing describes a process in which the user is guided and reminded to view "Magic Take" content when viewing a video associated with "Magic Take" content for the first time. A process in which the user views the original video and the "Magic Take" content is described below with reference to FIG. 16~FIG. 19.

In an example embodiment, after the user taps any region covered by the mask in the video playback interface, the bubble guide box and the mask disappear and the video is automatically played.

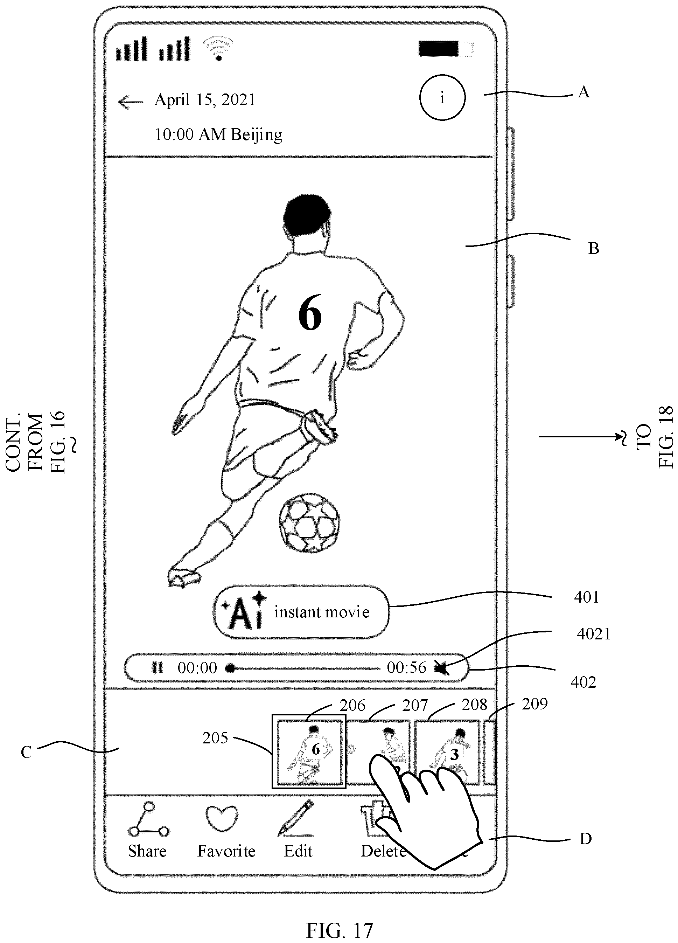

For example, as shown in FIG. 16, if the user touches (or taps) any position of the regions A, B, and D covered by the mask, the mobile phone displays the interface shown in FIG. 17, and the mask and the guide box 204 disappear. At the same time, the region B may automatically play the video associated with the "Magic Take" content, that is, the video corresponding to the thumbnail 206. As shown in FIG. 17, when the region B plays the video, the content and state displayed in the region C do not change.

In another example embodiment, after the mask and the guide box 204 disappear, the video in the region B may be in a playing pause state by default, that is, a play control is displayed on the video displayed in the region B, and the video is played only after the user manually taps the play control.

As shown in FIG. 17, the region B further includes a play progress bar 402 and an "AI instant movie" control 401. Here, the "AI instant movie" control 401 is a portal for generating a short highlight video. For example, if the user taps the control 401, a play interface of the short highlight video is entered.

As shown in FIG. 17, the play progress bar 402 displays duration of the video of 56 seconds and a current play progress of 0 seconds. The play progress bar may also be referred to as a play slide bar, and the user may drag the slide bar to adjust the play progress. The play progress bar 402 may further include a volume controller 4021. Content displayed on the play progress bar is not limited in the embodiment of this application.

In a possible implementation, considering that an environment in which the user is currently located may not be suitable for playing the video, to avoid interference of the video playing sound to the user, the video may be automatically played silently by default, and the user needs to tap the volume controller 4021 to resume the video playing sound. The volume controller 4021 may also be referred to as a mute key or a mute control.

Further, if the user taps the control shown in the region D in FIG. 17, an interface for a corresponding operation of the currently displayed item is entered. For example, if the user taps the "Edit" control in FIG. 17, an editing interface for the currently played video is entered. For another example, if the user taps the "Share" control in FIG. 17, a share interface for the currently played video is entered.

In another example embodiment, the mobile phone responds to the operation of the user on the thumbnail in the region C after the guide box and the mask disappear.

If the user taps a thumbnail in the region C directly, the tapped thumbnail is the currently displayed item, and the region B directly displays a photo corresponding to the currently displayed item. If the user slides the thumbnail list in the region C leftward or rightward, the thumbnails move leftward or rightward accordingly. The mobile phone can compare a size relationship between a moving distance of the finger on the screen and a corresponding threshold to determine the currently displayed item.

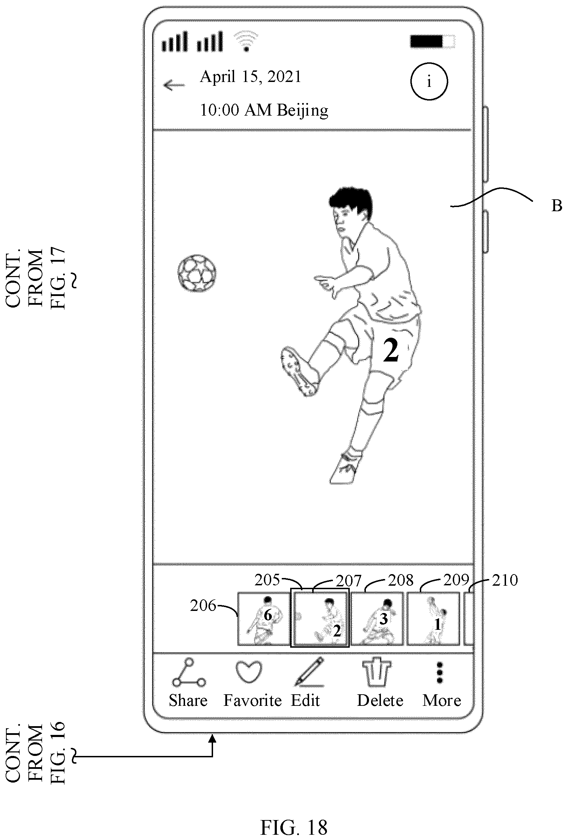

For example, the user first taps any position in the interface shown in FIG. 16, the guide box 204 and the mask disappear, and the original video is automatically played. Thereafter, if the user taps (or slides) the thumbnail in the thumbnail region (that is, the region C) shown in FIG. 17, the positioning box 205 is positioned on the thumbnail that is tapped or slidably positioned (for example, the thumbnail 207), and a photo corresponding to the thumbnail 207 is displayed in the region B, that is, the interface shown in FIG. 18 is displayed.

In another example embodiment, in a status in which the guide box and the mask are displayed, if the user directly taps or slides the thumbnail list in the region C, the guide box and the mask disappear, and a photo or video that is tapped or slidably positioned by the user is directly displayed in the video or photo display region (that is, the region B).

As shown in FIG. 16, if the user slides the thumbnail list of the region C to the left, the guide box 204 and the mask disappear, and the currently displayed item is determined according to a sliding displacement of the finger on the screen.

In an example, for example, if the sliding displacement is greater than a first threshold (such as half the side length of the thumbnail), it is determined that the currently displayed item is switched from the video or photo corresponding to the thumbnail 206 to a photo corresponding to the next thumbnail (that is, the thumbnail 207), and the positioning box 205 is positioned in the thumbnail 207, and the region B displays the photo corresponding to the thumbnail 207, that is, the mobile phone displays the interface shown in FIG. 18.

In another example, for example, after a sliding off-hand operation is detected and the thumbnail list stops moving, a moving displacement of the thumbnail list is determined. The moving displacement of the thumbnail list may be determined based on the sliding displacement of the sliding operation. Then, a ratio of the moving displacement to the width of the thumbnail is calculated, and the ratio is rounded to obtain a first value.

If the first value is equal to 0, a thumbnail remaining in the area in which the selector is located is determined as an original thumbnail. The original thumbnail is a thumbnail in the area in which the selector is located before the sliding operation is received. For example, the selector is positioned at the position of the thumbnail 206 before the current sliding operation is received, that is, the thumbnail 206 is the original thumbnail.

If the first value is greater than 0, it is determined that a thumbnail that is in a target direction of the original thumbnail in the thumbnail list and that is spaced apart from the original thumbnail by the first value is a new thumbnail. The target direction is a direction opposite to the sliding direction of the sliding operation. For example, if the ratio of the moving displacement to the width of the thumbnail is 1.5, the rounded first value is 2. The original thumbnail is the thumbnail 206, the sliding operation is a leftward sliding operation, and the new thumbnail is the thumbnail 209 on the right side of the thumbnail 206 and is spaced apart from the thumbnail 206 by two thumbnail widths.

In a possible implementation, the position of the positioning box 205 in the region C is relatively fixed, and the position of the thumbnail list is moved by a sliding operation, so that the positioning box 205 is positioned at a different thumbnail.

In an example, as shown in FIG. 18, the position of the positioning box 205 is fixed to a middle position in the width direction of the screen of the mobile phone. Alternatively, the position of the positioning box 205 is fixed at a position, in the region C, close to the left frame of the mobile phone, that is, the leftmost position in the region C. Certainly, the positioning box 205 may also be fixed at other positions in the region C. This is not limited in this embodiment of this application.

In another possible implementation, the position of the positioning box 205 in the region C is not fixed, that is, positions of both the thumbnail and the positioning box 205 can be moved. In this implementation, the thumbnails displayed in the region C may be sequentially arranged starting from the leftmost side of the region C. When the user slides the thumbnail list leftward or rightward, the currently displayed item is determined based on a sliding displacement of the finger on the screen and a thumbnail positioned by the positioning box 205 before the user performs the sliding operation.

In a scenario, a thumbnail of a currently displayed new item has been displayed in the region C. In such a scenario, the thumbnail list does not need to be moved in the sliding direction, and the positioning box 205 only needs to be moved to the currently displayed new item.

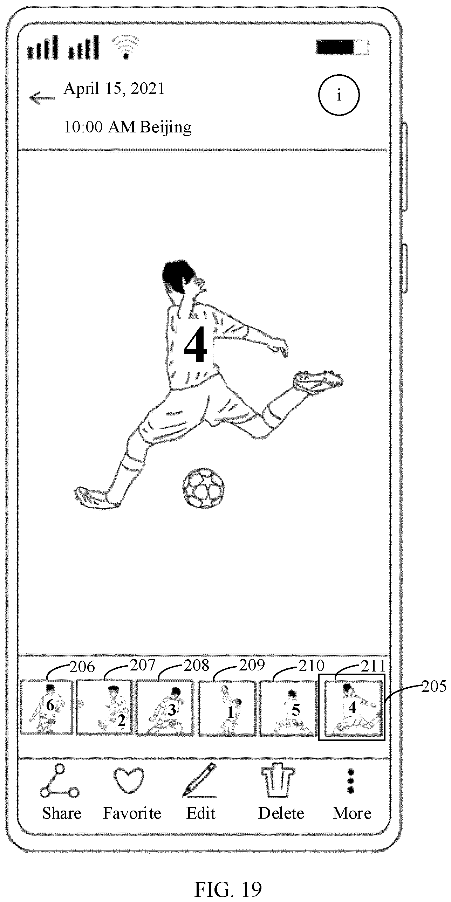

For example, when the positioning box 205 is positioned in the 1^{st} thumbnail in the thumbnail list (the thumbnail 206 in FIG. 19), if the user slides the thumbnail list to the left, the positioning box 205 moves to the right, and if the user stops sliding when the positioning box 205 stops at the position of the thumbnail 211, that is, as shown in FIG. 19, the positioning box 205 stays on the thumbnail 211, that is, a photo corresponding to the thumbnail 211 is a currently displayed new item.

In another scenario in which the thumbnail of the currently displayed new item is not displayed in the region C, the thumbnail list needs to be moved in the sliding direction, so that the currently displayed new item is displayed in the region C. Further, whether it is necessary to move the positioning box 205 is determined according to the sliding displacement.

If the positioning box 205 is located exactly at the position of the currently displayed new item after the thumbnail list is moved, it is not necessary to move the positioning box 205. If the positioning box 205 is not located at the position of the currently displayed new item after the thumbnail list is moved, the positioning box 205 is moved to the position corresponding to the currently displayed new item.

The user directly switches the object displayed in the region B by sliding or tapping the thumbnail list in the region C. If the user taps the thumbnail 206 (that is, the thumbnail of the original video) in the thumbnail list when the region B displays "Magic Take" content, the region B is switched to an interface for playing the original video. For example, the user switches from the interface shown in FIG. 17 to the interface shown in FIG. 18. If the user taps the thumbnail 206 corresponding to the original video in the interface shown in FIG. 18, the user switches back to the interface shown in FIG. 17. Moreover, when the original video is switched back for displaying, an original status in which the playback of the original video is last exited is maintained. For example, if the original video is in a playback state at the moment of switching from playing the original video to displaying a magic moment photo, when switching from displaying the magic moment photo to playing the original video, the playback state is directly entered, and playing is continued at the play progress when the playback is exited. If the original video is played to the 12th second and then switched to displaying the magic moment photo, then when the original video is switched back for playing, the playback continues from the 12th second. For another example, if the original video is in a paused state at the moment of switching from playing the original video to displaying the magic moment photo, then when switching from displaying the magic moment photo to playing the original video, the progress of the paused playback is consistent with the original play progress. The original play progress is a play progress of the original video when the state of displaying the original video is switched to the state of displaying the magic moment photo.

As described previously, in the scene in which the user slides the thumbnail list in the region C, and the thumbnail list follows the movement, different sliding speeds of the user indicate different displacements of the thumbnail list following the movement.

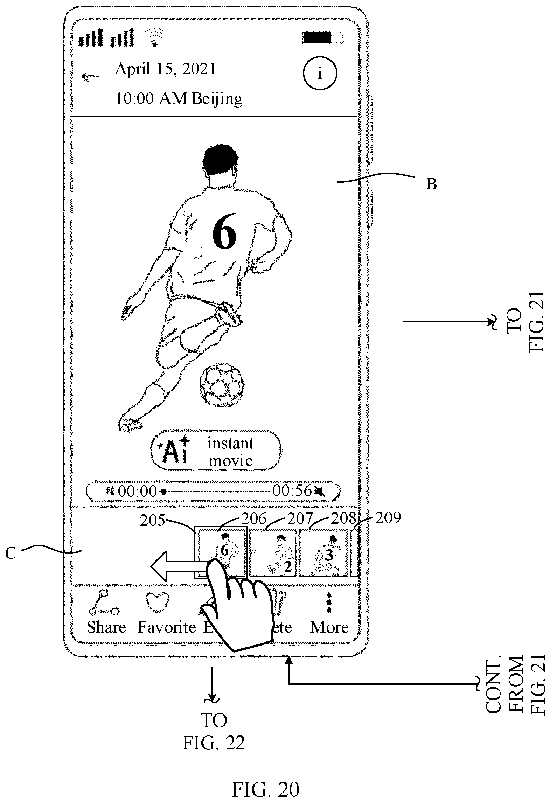

A process in which different users slide the thumbnail list at different speeds and the thumbnail list follows the movement is described below with reference to FIG. 20~FIG. 22.

If the user's finger slides the thumbnail list in the region C (for example, slides the thumbnail list in the region C to the left), the mobile phone can detect a speed when the finger leaves the screen (that is, a sliding off-hand speed). If the sliding off-hand speed is 0, it indicates that the current sliding operation is a low-speed sliding operation (or referred to as a slow sliding operation), the mobile phone may determine whether the thumbnail list is reset or positioned to a new thumbnail based on the sliding displacement of the finger on the screen. If the sliding off-hand speed is greater than 0, it indicates that the current sliding operation is a high-speed sliding operation (or referred to as a fast sliding operation), and the thumbnail list inherits the sliding off-hand speed and continues to slide, until the sliding speed of the thumbnail list drops to 0, or the last thumbnail in the thumbnail list is at the position of the positioning box.

In an example, as the user slides the thumbnail list leftward or rightward, the thumbnails in the positioning box 205 are constantly switched, and accordingly, the photo displayed in the region B is also refreshed in real time to the thumbnail in the positioning box 205.

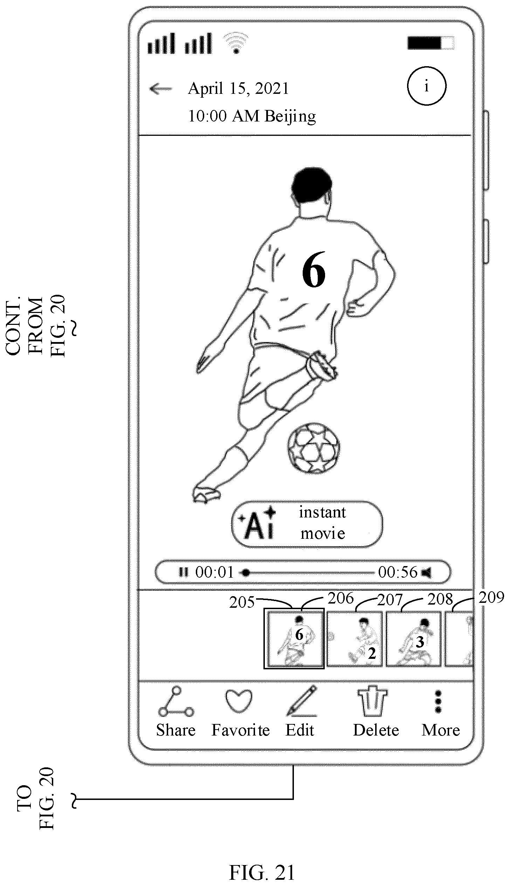

For example, as shown in FIG. 20, the user slides the thumbnail list to the left, and the sliding off-hand speed is 0. At this time, if it is detected that the sliding displacement is less than the first threshold (for example, half of the thumbnail size), it is determined to reset the thumbnail. When the finger slides to the left, the thumbnail list moves to the left, as shown in FIG. 21. However, after the finger leaves the screen, the thumbnail list returns to the initial position before sliding, that is, to the interface shown in FIG. 20, and the positioning box 205 is still positioned at the position of the thumbnail 206. In other words, the currently displayed item is not updated.

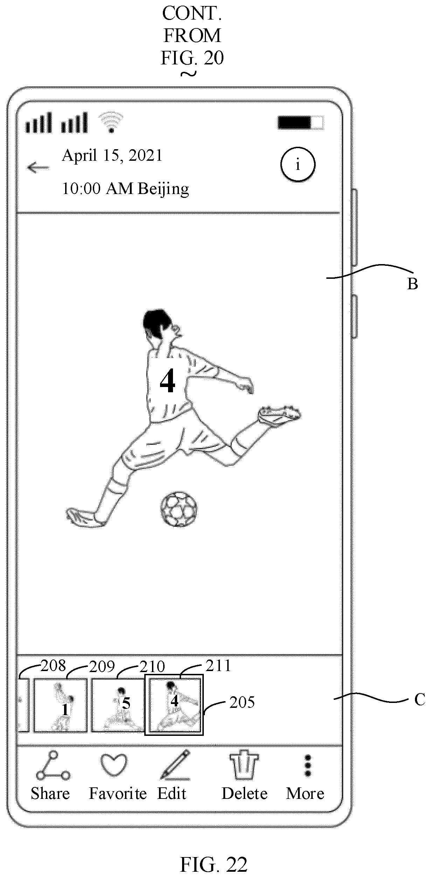

In another example, as shown in FIG. 20, the user slides the thumbnail list to the left. If the sliding displacement is large, as shown in FIG. 22, the 1^{st} thumbnail 206 in the thumbnail list may slide out of the left boundary of the region C until the sliding speed drops to 0. At this time, the thumbnail in the positioning box 205, that is, the thumbnail of the currently displayed item, is displayed. At the same time, the photo displayed in the region B during the sliding is refreshed in real time with the thumbnail in the positioning box 205.

In addition, in an example, when the positioning box 205 is at the left boundary of the thumbnail list (that is, the 1^{st} thumbnail in the thumbnail list, such as the thumbnail 206 in FIG. 20), if the user continues to slide the thumbnail list to the right (for example, a sliding speed to the right is high, and the sliding speed to the right is still greater than 0 when the thumbnail 206 has slid to the positioning box 205), because the positioning box is already at the left boundary of the thumbnail list, the thumbnail list cannot continue to slide, and when the user stops the sliding, the thumbnail list slides to the opposite direction (that is, to the left) by a specific displacement and then returns to a position at which the thumbnail 206 is located in the positioning box 205, that is, a dynamic effect of rebounding against the boundary is presented. Similarly, when the positioning box 205 is positioned on the right boundary of the thumbnail list (that is, the last thumbnail in the thumbnail list, such as the thumbnail 211 in FIG. 22), if the user continues to slide the thumbnail list to the left, a dynamic effect of rebounding against the boundary is also presented. Details are not described herein.

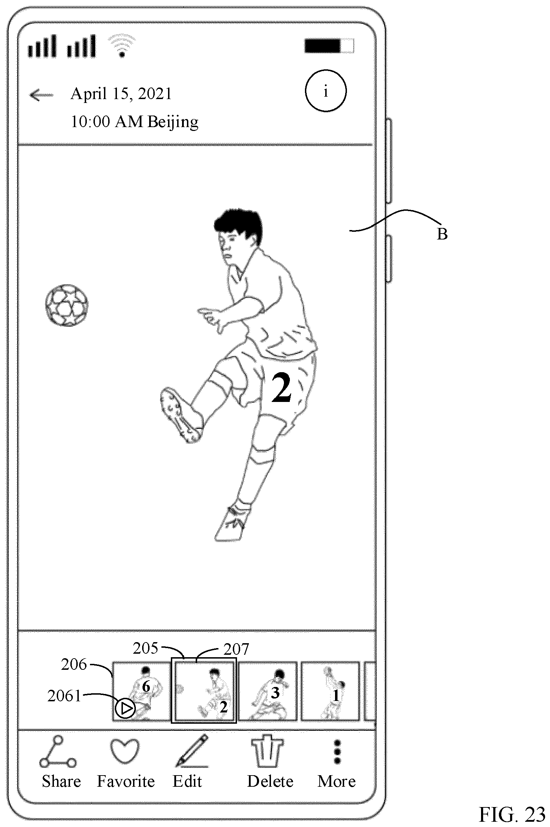

In another example, in a scenario in which a magic moment photo is displayed in a large-picture region (that is, the region B), to help a user visually identify a thumbnail corresponding to an original video and to retrieve the original video, a play control may be added to the thumbnail of the original video. For example, as shown in FIG. 23, the region B currently displays a photo corresponding to the thumbnail 207, and the thumbnail 206 in the region C further includes a play control 2061 through which the user can visually and accurately identify the original video. Further, the user may directly tap the play control 2061, so that the region B is switched to the interface for automatically playing the original video. Here, the video may be played from the beginning, or may continue to be played based on a play progress when the video is last exited.

In another example embodiment, the thumbnail of the currently displayed item when the mobile phone is in the landscape display mode is displayed by using an actual aspect ratio of the photo or video, while aspect ratios of the other thumbnails are displayed by using an aspect ratio of 1:1.

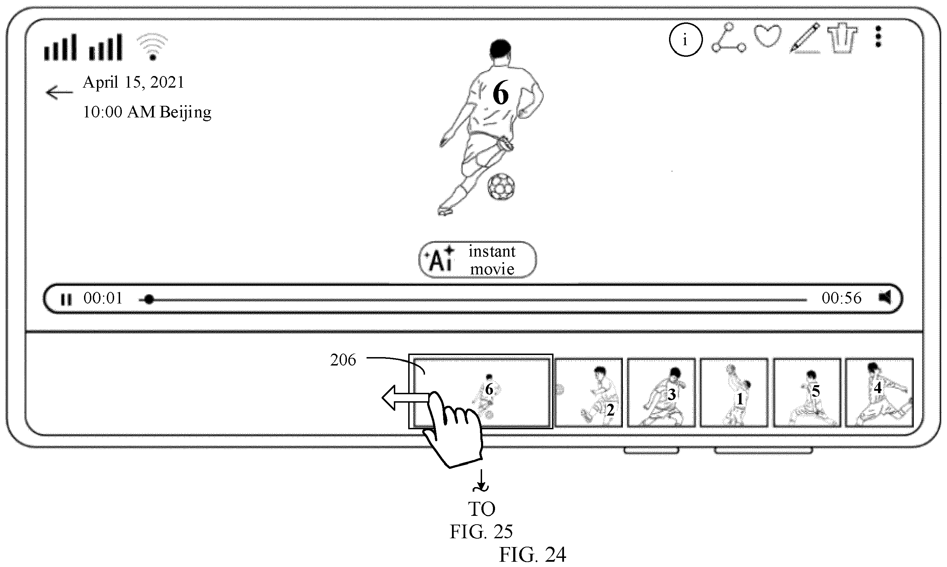

As shown in FIG. 24, the currently displayed item is a video corresponding to the thumbnail 206, and the aspect ratio of the thumbnail 206 is an actual aspect ratio of the original video, such as 16:9, and the other thumbnails use an aspect ratio of 1:1.

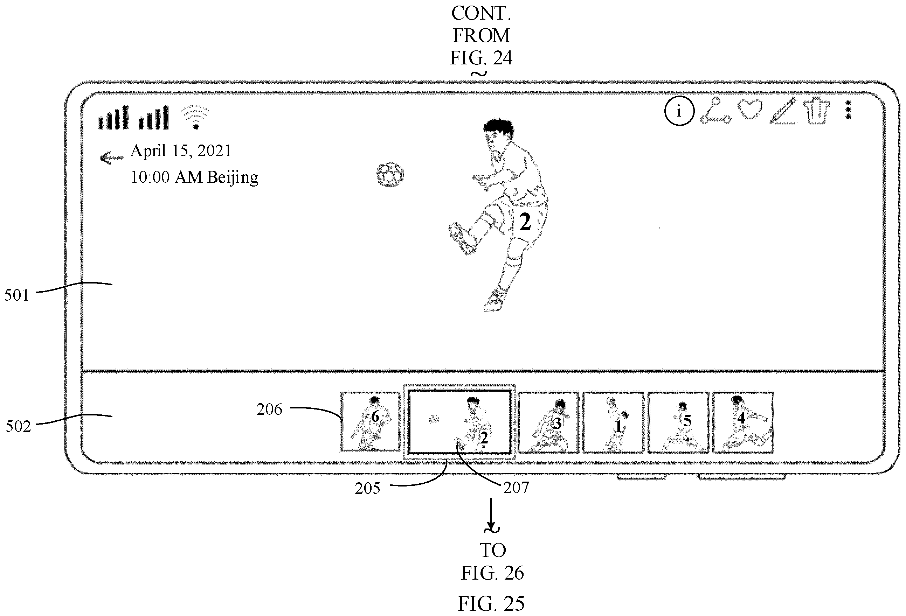

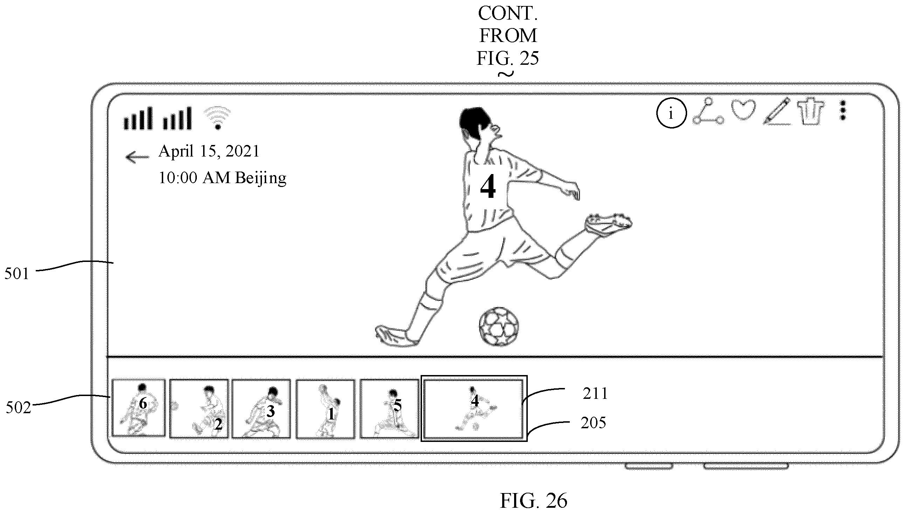

The user slides the thumbnail list shown in FIG. 24 to the left, and as shown in FIG. 25, the entire thumbnail list moves to the left, and an aspect ratio of the thumbnail in the positioning box 205 is an actual aspect ratio of a photo corresponding to the thumbnail. For another example, if the positioning box 205 is positioned on the thumbnail 211 at the end of the sliding operation, an aspect ratio of the thumbnail 211 is an actual aspect ratio of a photo corresponding to the thumbnail. For example, if an actual shooting ratio of the photo is 16:9, as shown in FIG. 26, the aspect ratio of the thumbnail 211 is 16:9.

Further, during the sliding, the large-picture region 501 is refreshed in real time to a photo corresponding to a thumbnail (the thumbnail 207 shown in FIG. 25 or the thumbnail 211 in FIG. 26) currently located in the positioning box 205.

In addition, in the landscape display mode, operable controls such as "Share", "Favorite", "Edit", "Delete", "More", and "Details" can be located in the upper right corner of the screen, as shown in FIG. 24-FIG. 26. Certainly, these operable controls may also be provided in other positions. This is not limited in this application.

Here, a moving effect of the thumbnail list in a sliding process in the landscape display mode is the same as that in the portrait display mode, and details are not described herein.

The foregoing describes the display effect of the user sliding the thumbnail list. In addition, the user may perform a sliding operation on the large-picture region (that is, the region B) in which the video or photo is displayed. For example, when the mobile phone displays an interface of a magic moment photo associated with a video, if the user slides the large-picture region (that is, the region B) to the left, the mobile phone switches to displaying the next photo (or video) adjacent to the video in the gallery application.

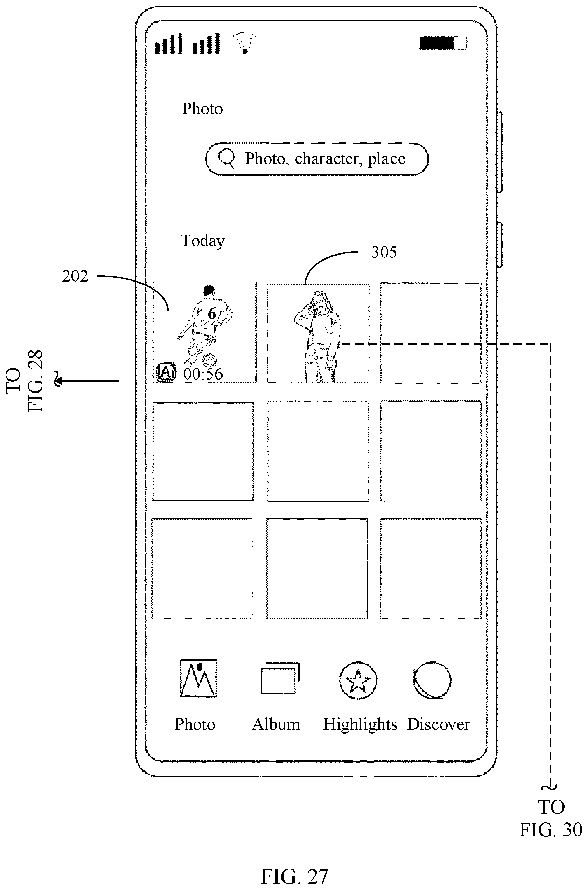

A change of the display interface when the user slides the large-picture region is described below with reference to FIG. 27~FIG. 30.

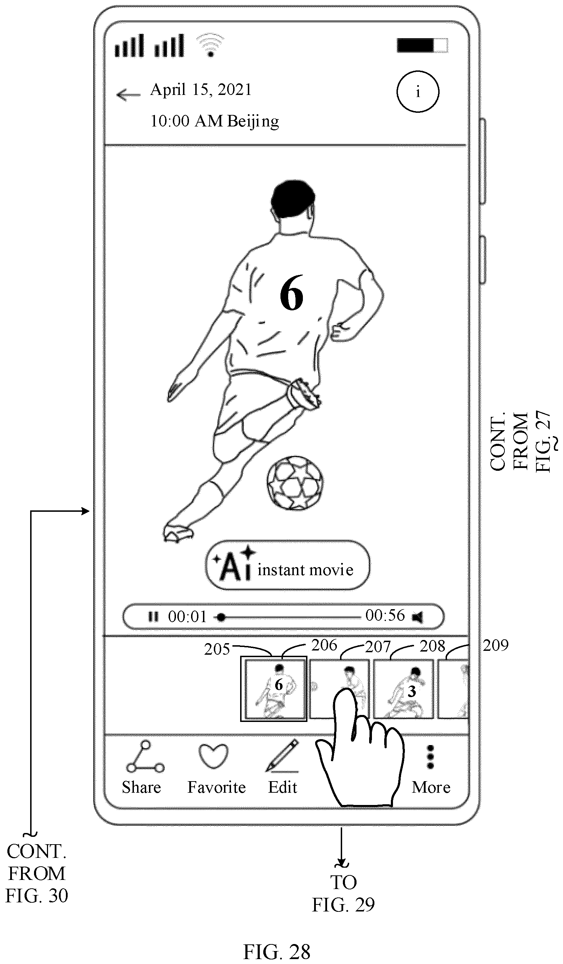

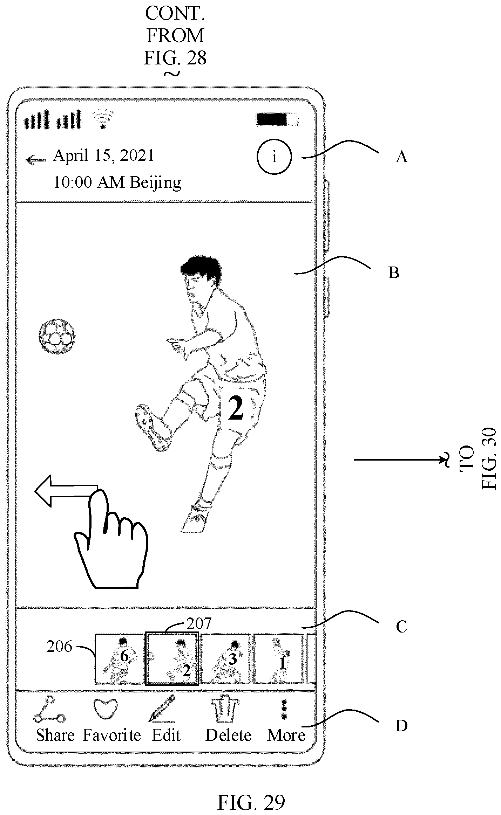

The following uses a photo tab in the gallery application as an example. As shown in FIG. 27, in the photo tab, the thumbnail of the video 202 includes an AI identifier, indicating that the video 202 is associated with "Magic Take" content. The next object of the video 202 is a photo 305. After the user taps the video 202, the user enters a video playback interface, as shown in FIG. 28. If the user taps the thumbnail 207 in FIG. 28, the user enters the interface shown in FIG. 29, that is, the large-picture region (that is, the region B) displays a photo corresponding to the thumbnail 207, and no longer displays video content of the video 202 and the "Instant movie" control.

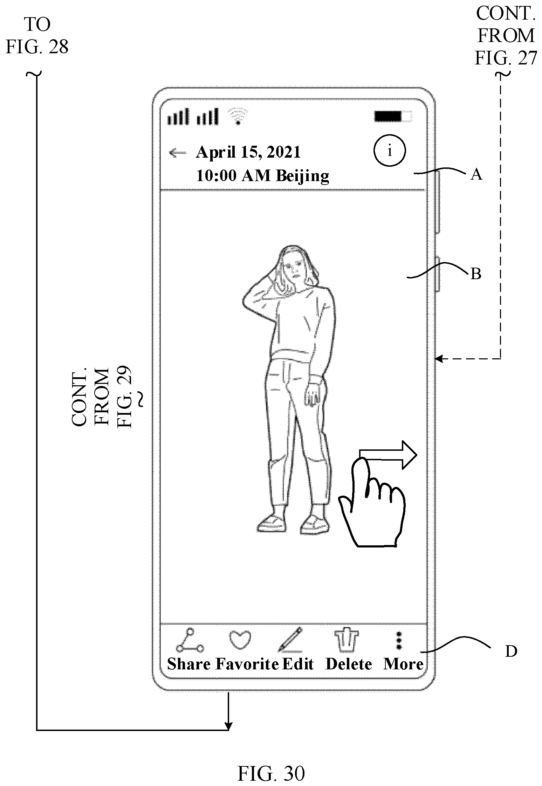

If the user slides to the left in the region B of FIG. 29, the mobile phone enters the interface shown in FIG. 30, that is, enters a common photo display interface, as shown in FIG. 30, and the photo 305 is displayed in the large-picture region. In addition, compared with the interface shown in FIG. 29, the interface does not include a region, that is, the region C, in which the thumbnail list corresponding to the "Magic Take" content is displayed.

If the user slides to the right in the region B shown in FIG. 30, the mobile phone switches to a play interface of a previous video of the photo 305, that is, to a play interface of the video 202 shown in FIG. 28. In some embodiments, after switching back to the play interface of the video 202 shown in FIG. 28, the video 202 may be reset to play from the beginning. Alternatively, the original state of the video 202 when the video 202 is exited last time is maintained, for example, the video 202 is in a paused playback state, and the play progress of the video 202 when the video 202 is exited last time is maintained; or the playback continues from the play progress of the video 202 when the video 202 is exited last time.

In other embodiments of this application, if there is a previous photo of the video 202, after the user slides to the right in the region B of FIG. 29, the mobile phone displays the previous photo of the video 202. A change of the interface is similar to the process of sliding to the left described above, and details are not described herein again.

In addition, FIG. 29 is merely an example of displaying a magic moment photo corresponding to the thumbnail 207 in the large-picture region. It may be understood that when any one of magic moment photos in the thumbnail list is displayed, a leftward (or rightward) sliding operation can be performed in the large-picture region to switch to a next photo/video (or a previous photo/video) of the video 202. In addition, in the large-picture region of the display video 202 shown in FIG. 28, a leftward sliding operation (or a rightward sliding operation) may also enable the mobile phone to switch to the next photo (or the previous photo) of the video 202. In other words, a switching effect of the display interface of the mobile phone for a leftward sliding/rightward sliding operation performed in the large-picture region for displaying the original video is the same as that for the leftward sliding/rightward sliding operation in the large-picture region for displaying the magic moment photo. Details are not described herein.

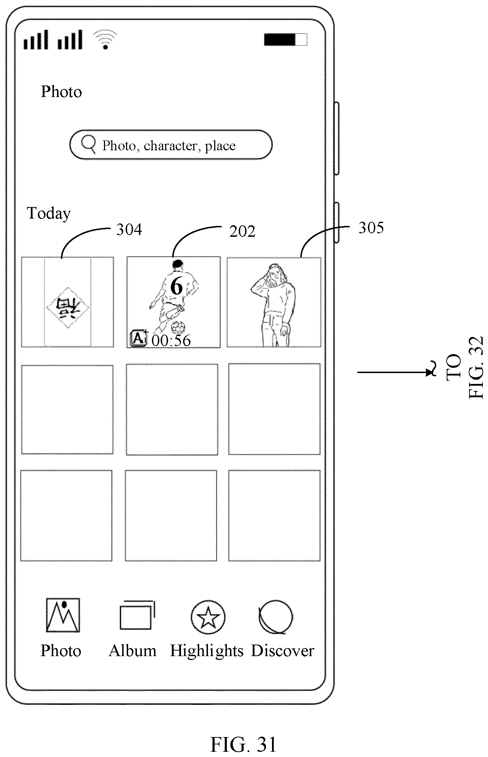

In the foregoing example, as shown in FIG. 28 and FIG. 29, the thumbnail list displayed in the region C includes only thumbnails of the video 202, and the magic moment photos corresponding to the video 202. In another possible implementation, the thumbnails displayed in the region C include not only thumbnails of content related to "Magic Take", but also thumbnails of other photos or videos in the gallery. The process of this part is described below with reference to FIG. 31-FIG. 33.

As shown in FIG. 31, in the gallery application, the video 202 is a video containing "Magic Take" content, the photo 304 is a previous photo of the video 202, and the photo 305 is a next photo of the video 202.

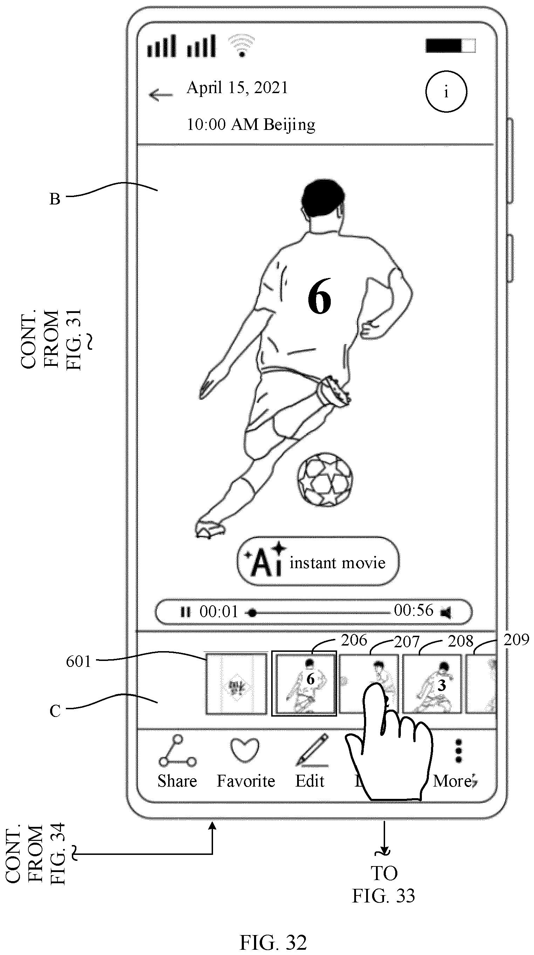

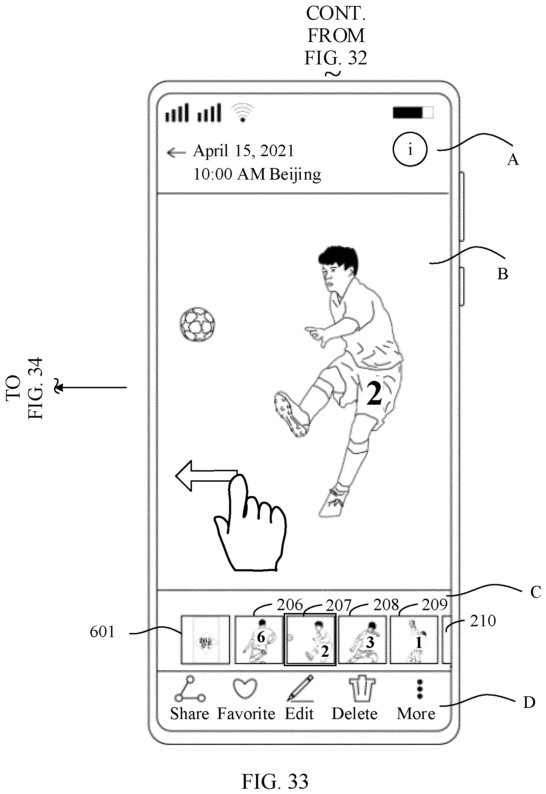

If the user taps the video 202 in FIG. 31, the user enters the interface shown in FIG. 32. If the user taps the thumbnail 207 shown in FIG. 32, the user enters the interface shown in FIG. 33.

As shown in FIG. 32 and FIG. 33, the region C may display thumbnails of other photos/videos in the gallery application in addition to thumbnails of magic moment photos associated with the video 202, that is, the region C may display thumbnails of all photos/videos in the gallery application. As shown in the figure, the thumbnail 206 is a thumbnail of the video 202, the thumbnails 207-209 are thumbnails of the magic moment photos corresponding to the video 202, and the thumbnail 601 is a thumbnail of the previous photo (that is, the photo 304) of the video 202.

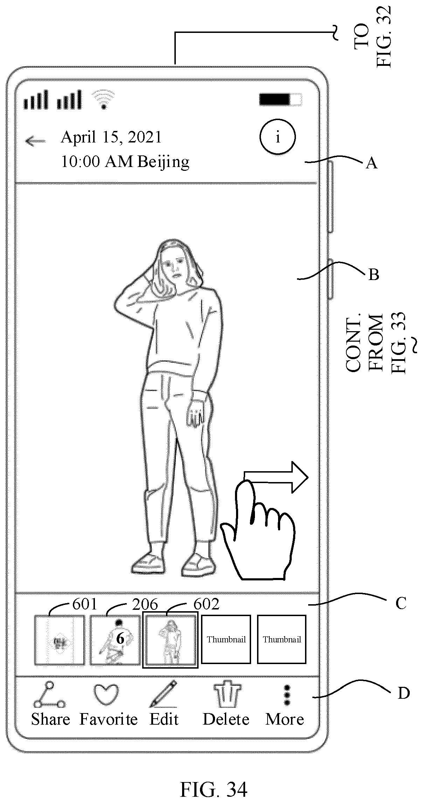

If the user performs a leftward sliding operation in the region B of the interface shown in FIG. 33, the user enters the interface shown in FIG. 34, and the region B switches to displaying the next photo of the video 202, that is, the photo 305. If the user performs a rightward sliding operation in the region B of FIG. 34, the region B switches to displaying the previous photo/video of the photo 305, that is, returns to the interface for playing the video 202 shown in FIG. 32.

In an example, if the currently displayed item is a video associated with "Magic Take" content or "Magic Take" content corresponding to the video, thumbnails of the video associated with "Magic Take" content and the "Magic Take" content corresponding to the video are displayed in a thumbnail region (that is, the region C) in an expanded manner. For example, as shown in FIG. 32 and FIG. 33, the thumbnails of the video 202 and the magic moment photos corresponding to the video are displayed in the region C in an expanded manner.

If the currently displayed item is a common photo or a common video (for example, the photo 305 displayed in the region B in FIG. 34), only a thumbnail corresponding to the original video (for example, the thumbnail 206) may be displayed in the thumbnail region, and thumbnails corresponding to the "Magic Take" content (for example, the thumbnail 207, the thumbnail 208, or the thumbnail 209) may no longer be displayed. In addition, thumbnails of the common photo and the common video are normally displayed in the thumbnail region. In other words, in this case, a quantity and order of thumbnails displayed in the thumbnail region below the large-picture region are the same as those of thumbnails in the gallery.

In this way, in a scenario in which no "Magic Take" content is displayed, the thumbnails of the "Magic Take" content are prevented from occupying too much display space, so that more thumbnails that the user may view are displayed in a limited display region, thereby improving user experience. In addition, it can be ensured that a sequence of the thumbnails displayed in the region C is consistent with that of the thumbnails in the gallery application.

In addition, the operation of the user on the thumbnail list in the region C and the switching effect of the display interface described above in the embodiment of this application are also applicable to the embodiment shown in FIG. 32~FIG. 34. In other words, the user may perform a tapping operation or rightward and leftward sliding operations on the thumbnail list displayed in the region C in FIG. 32-FIG. 34 to switch a video or a photo to be displayed in the region B. The switching effect of the interface is similar to that of the embodiment in which the thumbnail list does not include other photos or videos in the gallery. Details are not described herein.

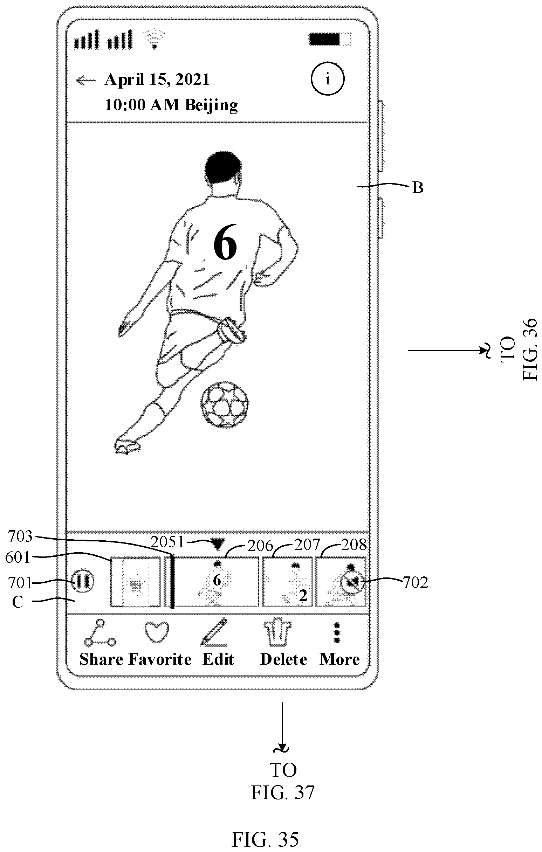

In another example, when playing the original video associated with the "Magic Take" content, the region B does not display a play progress bar, as shown in FIG. 35, and the play progress bar is displayed in the region C.

As shown in FIG. 35, the play progress bar includes a playing pause control 701 located at the left boundary of the region C, a mute control 702 located at the right boundary of the region C, and a play progress control 703 on the thumbnail of the original video. Here, the mute control 701 may also be referred to as a mute key or a volume controller.

In this scenario, to clearly display a video play progress, as shown in FIG. 35, the width of the thumbnail corresponding to the original video is larger than the widths of other thumbnails. As the play progress of the video changes, a position of the play progress control 703 on the thumbnail is moved leftward or rightward.

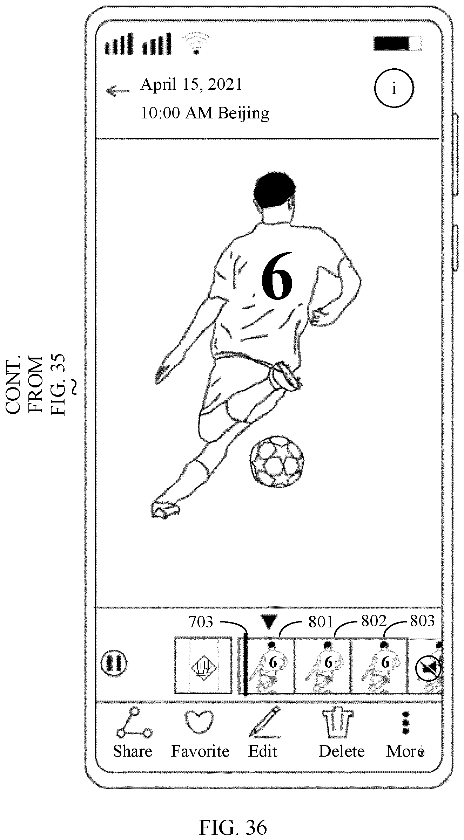

If the user taps the thumbnail 206 in FIG. 35, the user enters the interface shown in FIG. 36, and an image frame sequence of the original video is displayed in the region C in an expanded manner. The image frame sequence includes a plurality of image frames in the original video arranged in a time sequence from early to late. As shown in FIG. 36, the thumbnails 801-803 are image frames in the original video.

It may be understood that FIG. 36 shows only three image frames in a video image frame sequence. An actual video image frame sequence includes a plurality of (for example, a dozen of, dozens of, or even more) image frames, and more image frames may be displayed in the region C as the user slides the image frame sequence leftward or rightward. In this way, the user can accurately adjust the play progress of the video directly according to the image frame in the video, thereby improving the accuracy of progress adjustment.

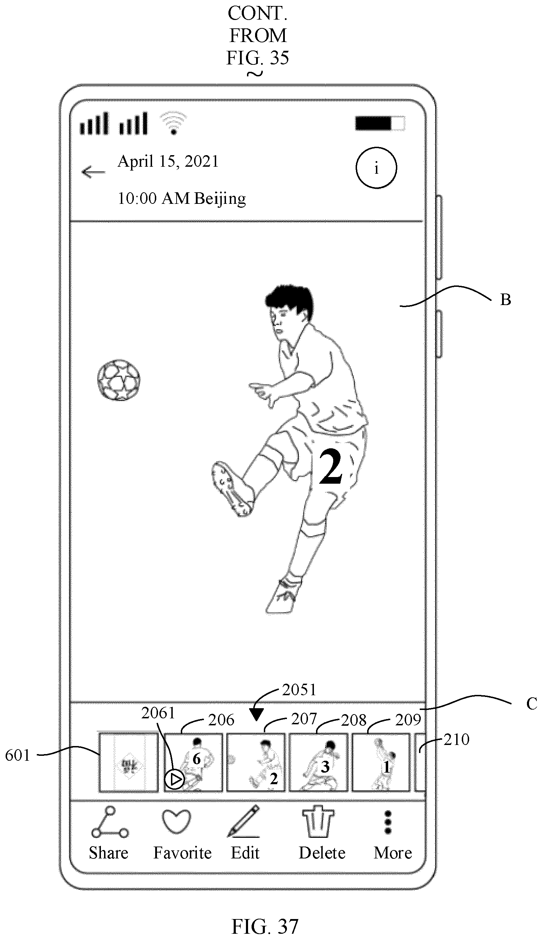

When the magic moment photo is displayed in the region B, for example, the user taps a thumbnail (such as the thumbnail 207) of the magic moment photo in FIG. 35 to enter the interface shown in FIG. 37, the selector 2051 is positioned above the thumbnail 207, and the region B displays the photo corresponding to the thumbnail 207. The region C no longer displays the play progress bar, nor displays the image frame sequence of the original video in an expanded manner, but displays the thumbnail 206 only in the region C, and displays a play control 2061 on the thumbnail 206. A display policy and a function of the play control 2061 in FIG. 37 are the same as those of the play control 2061 in FIG. 23. Details are not described herein.

In addition, the user slides the large-picture region (that is, the region B) leftward or rightward, and a display effect corresponding to the region B is the same as that in FIG. 32~FIG. 34. For example, the user slides the region B leftward or rightward, and the region B displays a next/previous photo adjacent to the original video in the gallery application.

In an example, when the region B displays a common photo or video in the gallery application (such as the photo 305 displayed in the region B in FIG. 34), the region C may display only the thumbnail of the original video (such as the thumbnail 206), and no longer display the image frame sequence of the original video in an expanded manner and the thumbnails associated with "Magic Take" content (such as the thumbnail 207, 208, or 209).

In addition, the play progress bar shown in FIG. 35 and FIG. 36 may also be applied to the scene shown in FIG. 27~FIG. 30. In this scene, the region C displays only thumbnails of the original video and the associated "Magic Take" content, and does not display thumbnails of other photos or videos in the gallery application. In this scene, a display effect of the play progress bars is similar to that in the example shown in FIG. 35 and FIG. 36. Details are not described herein.

Through the description of the foregoing implementations, a person skilled in the art may clearly understand that, for the purpose of convenient and brief description, only division of the foregoing functional modules is used as an example for description. In an actual application, the functions may be allocated to and completed by different functional modules as required. That is, an internal structure of the apparatus is divided into different functional modules, to complete all or some of the functions described above. For a specific working process of the system, apparatus, and unit described above, refer to a corresponding process in the foregoing method embodiments. Details are not described herein again.

In the several embodiments provided in this embodiment, it should be understood that the disclosed system, apparatus, and method may be implemented in another manner. For example, the described apparatus embodiment is merely an example. For example, the module or unit division is merely logical function division and may be another division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate components may or may not be physically separated, and components displayed as units may or may not be physical units, that is, may be located in one place, or may be distributed on a plurality of network units. Some or all of the units may be selected based on an actual requirement, to achieve the objectives of the solutions in embodiments.

In addition, functional units in the embodiments may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of the embodiments essentially, or the part contributing to the conventional technology, or all or some of the technical solutions may be implemented in a form of a software product. The computer software product is stored in a storage medium and includes several instructions for instructing a computer device (which may be a personal computer, a server, or a network device) or a processor to perform all or some of the steps of the methods described in the embodiments. The foregoing storage medium includes any medium that can store program code, for example, a flash memory, a removable hard disk, a read-only memory, a random access memory, a magnetic disk, or an optical disc.

The foregoing descriptions are merely specific implementations of this application. However, the protection scope of this application is not limited thereto. Any change or replacement within the technical scope disclosed in this application shall fall within the protection scope of this application. Therefore, the protection scope of this application shall be subject to the protection scope of the claims.

## Claims

1. A method for browsing multimedia content, applied to an electronic device, wherein the method comprises:
displaying a first interface in response to an operation of a user for opening a gallery application, wherein the first interface comprises a first thumbnail of a first video;
displaying a play interface of the first video in response to an operation that is input by the user for the first thumbnail, wherein the play interface comprises a first region and a second region, the second region displays the first video, the first region comprises a thumbnail list, and the thumbnail list comprises a thumbnail of at least one magic moment photo associated with the first video; and
in response to an operation of the user selecting a second thumbnail in the thumbnail list, displaying a first magic moment photo corresponding to the second thumbnail in the second region, and skipping displaying the first video.

2. The method according to claim 1, wherein the magic moment photo is automatically shot during recording of the first video; or
the magic moment photo is shot, during recording of the first video, in response to a touch operation of the user on a photo key.

3. The method according to claim 1 or 2, wherein the thumbnail list further comprises a third thumbnail of the first video.

4. The method according to claim 3, wherein the third thumbnail of the first video further comprises a play control when the second region displays the first magic moment photo corresponding to the second thumbnail.

5. The method according to any one of claims 1-4, wherein the first region further comprises a selector, and the method further comprises:
moving the thumbnail list in the first region in response to a sliding operation of the user on the thumbnail list, wherein a thumbnail remaining in an area in which the selector is located is the first thumbnail selected by the user.

6. The method according to claim 5, wherein the moving the thumbnail list in the first region in response to a sliding operation of the user on the thumbnail list comprises:
determining sliding parameters of the sliding operation after detecting the sliding operation of the user on the thumbnail list, wherein the sliding parameters comprise a sliding speed and a sliding direction;
triggering the thumbnail list to move in the sliding direction and to move at a moving speed that matches the sliding speed;
determining a sliding off-hand speed after detecting a sliding off-hand operation; and
if the sliding off-hand speed is 0, triggering the thumbnail list to stop moving; or
if the sliding off-hand speed is greater than 0, triggering the thumbnail list to continue moving at the sliding off-hand speed until the moving speed drops to 0.

7. The method according to claim 6, wherein the method further comprises:
determining a moving displacement of the thumbnail list after the thumbnail list stops moving;
obtaining a ratio of the moving displacement to a width of the thumbnail, and performing a rounding operation on the ratio to obtain a first value; and
if the first value is equal to 0, determining that the thumbnail remaining in the area in which the selector is located is an original thumbnail, wherein the original thumbnail is a thumbnail in the area in which the selector is located before the sliding operation is received; or
if the first value is greater than 0, determining that a thumbnail that is in a target direction of the original thumbnail in the thumbnail list and that is spaced apart from the original thumbnail by the first value is the thumbnail remaining in the area in which the selector is located, wherein the target direction is a direction opposite to the sliding direction of the sliding operation.

8. The method according to claim 6 or 7, wherein the method further comprises:
in a process of moving the thumbnail list to the right in response to a rightward sliding operation of the user, if the 1^{st} thumbnail in the thumbnail list is in the area in which the selector is located, and it is detected that a sliding off-hand speed of the rightward sliding operation is greater than 0, triggering the thumbnail list to move leftward by a first preset displacement to return to a position at which the 1^{st} thumbnail is located in the area in which the selector is located; and
in a process of moving the thumbnail list to the left in response to a leftward sliding operation of the user, if the last thumbnail in the thumbnail list is in the area in which the selector is located, and it is detected that a sliding off-hand speed of the leftward sliding operation is greater than 0, triggering the thumbnail list to move rightward by a second preset displacement to return to a position at which the last thumbnail is located in the area in which the selector is located.

9. The method according to claim 1, wherein the method further comprises: in response to a tapping operation of the user on the thumbnail list, determining a tapped thumbnail as the first thumbnail selected by the user.

10. The method according to any one of claims 3-9, wherein the method further comprises:
displaying the first video in the second region in response to an operation that is input by the user for the third thumbnail of the first video, wherein a display status and a play progress of the first video are the same as those of the first video when the first video was last exited, and the display status comprises a playing state and a playing pause state.

11. The method according to any one of claims 1-10, wherein the thumbnail list further comprises a thumbnail of another photo or video other than the first video in the gallery application.

12. The method according to claim 11, wherein the method further comprises:
in response to a sliding operation of the user on the second region, displaying, in the second region, content corresponding to a fourth thumbnail adj acent to the first thumbnail of the first video in the gallery application.

13. The method according to claim 12, wherein when the first video or a magic moment photo associated with the first video is displayed in the second region, the thumbnail of the first video and a thumbnail of the magic moment photo are displayed in an expanded manner in the thumbnail list.

14. The method according to claim 12 or 13, wherein when content of the another photo or video is displayed in the second region, the thumbnail list displays the third thumbnail of the first video and hides the thumbnail of the magic moment photo associated with the first video.

15. The method according to claim 13, wherein the method further comprises:
when content corresponding to the fourth thumbnail is displayed in the second region, playing the first video in the second region from the 0th second in response to a sliding operation of the user on the second region, and skipping displaying the content corresponding to the fourth thumbnail in the second region.

16. The method according to any one of claims 1-15, wherein the method further comprises:
when content of the first video is displayed in the second region, the first region further comprises a play progress bar, and the play progress bar comprises a playing pause control, a mute control, and a play progress control;
the playing pause control is located at a first boundary of the first region, and the mute control is located at a second boundary of the first region; and
the play progress control is located on the third thumbnail of the first video, and a width of the third thumbnail is larger than a width of another thumbnail in the thumbnail list.

17. The method according to claim 16, wherein the method further comprises:
displaying an image frame sequence of the first video in an expanded manner in the thumbnail list in response to an operation that is input by the user for the third thumbnail; and
displaying, in the second region in response to an operation that is input by the user for the play progress control, an image frame located by the play progress control.

18. The method according to claim 17, wherein the method further comprises:
when the second region displays a magic moment photo associated with the first video, displaying the third thumbnail of the first video in the thumbnail list and hiding the image frame sequence of the first video.

19. The method according to any one of claims 1-15, wherein the method further comprises:
displaying a second interface in response to a sliding operation of the user on the second region, wherein the second interface displays the content of the fourth thumbnail adjacent to the first thumbnail of the first video in the gallery application, and does not display the thumbnail list.

20. The method according to any one of claims 1-19, wherein an aspect ratio of each thumbnail in the thumbnail list is 1:1; or
an aspect ratio of the first thumbnail is an actual aspect ratio of a video or photo corresponding to the first thumbnail, and an aspect ratio of another thumbnail in the thumbnail list is 1:1.

21. The method according to claim 19, wherein a height of the first thumbnail is greater than a height of another thumbnail in the thumbnail list.

22. The method according to claim 1, wherein the thumbnail of the first video comprises a first identifier, and the first identifier is used to indicate that the first video is associated with at least one magic moment photo.

23. The method according to claim 1, wherein the first region is located below the second region, and an area of the second region is larger than an area of the first region.

24. An electronic device, wherein the electronic device comprises one or more processors, a memory, and a touchscreen; the memory is configured to store program code; the processor is configured to run the program code, to enable the electronic device to implement the method for browsing multimedia content according to any one of claims 1 to 23.

25. A computer-readable storage medium storing instructions, wherein when the instructions are run on an electronic device, the electronic device is enabled to perform the method for browsing multimedia content according to any one of claims 1 to 23.
